(19) Europäisches Patentamt
European Patent Office
Office européen des brevets

(11) Numéro de publication: **0 420 710 B1**

(12) **FASCICULE DE BREVET EUROPEEN**

(45) Date de publication de fascicule du brevet: **07.12.94**

(51) Int. Cl.⁵: **B01F 17/52**, C09K 7/06, E21B 43/25

(21) Numéro de dépôt: **90402386.8**

(22) Date de dépôt: **29.08.90**

(54) **Emulsions inverses réalisées à l'aide d'un émulsifiant et leur utilisation dans des puits de forage.**

(30) Priorité: **05.09.89 FR 8911601**

(43) Date de publication de la demande:
**03.04.91 Bulletin 91/14**

(45) Mention de la délivrance du brevet:
**07.12.94 Bulletin 94/49**

(84) Etats contractants désignés:
**DE FR GB IT NL SE**

(56) Documents cités:
**EP-A- 0 386 507**
**DE-A- 3 636 429**
**US-A- 4 421 656**
**US-A- 4 745 154**

(73) Titulaire: **TOTAL**
**Tour TOTAL,**
**24, Cours Michelet**
**F-92800 Puteaux (FR)**

(72) Inventeur: **Binon, Jean-Pierre**
**Résidence Les Imperators,**
**Chemin de la Lauve**
**F-83700 Saint-Raphael (FR)**

(74) Mandataire: **Jolly, Jean-Pierre et al**
**Cabinet Jolly**
**54, rue de Clichy**
**F-75009 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne des émulsions inverses, c'est-à-dire de type eau dans huile, réalisées à l'aide d'un nouvel émulsifiant, et l'utilisation de ces émulsions inverses dans des puits de forage pétroliers, miniers ou géothermiques.

Les émulsions inverses utilisées de façon usuelle dans ces techniques comprennent généralement jusqu'à 50% en volume d'une saumure contenant différents sels ou mélanges de sels, 50% en volume d'huile, un ou plusieurs émulsifiants oléosolubles, et une phase solide, qui sert à la fois à ajuster la densité de l'émulsion en agissant comme oléodurcissant, à contrôler la filtration et à régler la viscosité de l'émulsion.

Lorsque de hautes pressions risquent d'être rencontrées dans le forage de puits, on utilise des solides alourdissants du type de sulfate de baryum, ou de carbonate de calcium, qui peuvent toutefois endommager gravement le réservoir.

Il a donc été proposé d'utiliser des agents alourdissants ne comportant pas de solides, tels que des saumures lourdes, simples ou complexes, à base de sels : $CaBr_2$ et/ou $ZnBr_2$, $CaCl_2$, NaCl, KCl, $K_2CO_3$ etc..

Avec des émulsifiants classiques, les systèmes de boue à émulsion inverse utilisés en forage avec de telles saumures ne constituent pas des émulsions stables en température, même en adaptant le rapport huile/saumure, en augmentant la concentration de ces émulsifiants et en saponifiant ceux-ci avec des sels alcalins ou alcalinoterreux tels que $Ca(OH)_2$. Cette instabilité des boues émulsionnées inverses se traduit soit par des précipitations de sels, soit par des phénomènes de déphasage ou de coalescence, soit encore par un relargage d'huile après fabrication de l'émulsion, après ou avant vieillissement à 150 °C.

De plus, l'utilisation de chaux ou de composés alcalins peut poser des problèmes de compatibilité avec certains sels, qui sont stables à des pH faiblement acides.

Comme compositions à émulsion inverse de la techique connue, avec les problèmes qu'elles entraînent, on peut citer par exemple les deux formulations suivantes :

COMPOSITION A :

Cette composition, de masse spécifique 1,15 g/cm$^3$, est constituée d'une huile HDF 200, de densité 0,817, commercialisée par le groupe TOTAL, et d'une saumure mixte $CaBr_2$-$CaCl_2$, de densité 1,63, avec un rapport H/S (huile/saumure) de 60/40.

Cette émulsion comprend en outre les agents commercialisés sous les appellations suivantes :

| | |
|---|---|
| - VERSAMOD | 20 g/l, |
| - VERSAMUL | 23 g/l, |
| - DOVAMUL HV | 9 g/l, |

ainsi que 12 g/l de $Ca(OH)_2$.

A la fabrication, une telle composition présente des caractéristiques rhéologiques (viscosité plastique VP et Yield Value YV) satisfaisantes :

VP = 20
YV = 13.

Sa stabilité électrique est également correcte (1260 volts à 60 °C) et elle présente un filtrat faible (3cm$^3$ selon l'essai API 13) caractérisé par de l'huile, mais avec un dépôt ("cake") très épais.

Cependant, après vieillissement de cette composition à 150 °C pendant 24 heures, l'émulsion déphase totalement et il y a précipitation de sels.

COMPOSITION B.

Une autre formation, de densité 1,15, proposée par une société de service, comprend, comme la Composition A, une huile HDF 200, de densité 0,817, et une saumure mixte $CaBr_2$ ou $CaCl_2$ de densité 1,63, avec les additifs suivants (désignés, pour certains, par leurs appellations commerciales) :

| | |
|---|---|
| - KENCAL (émulsifiant) | 8 $cm^3/l$, |
| - KENOL (émulsifiant) | 24 $cm^3/l$, |
| - F54 (émulsifiant) | 15 $cm^3/l$, |
| - $RF_3$ (réducteur de filtrat) | 10 $cm^3/l$, |
| - $Ca(OH)_2$ | 5 g/l. |

A la fabrication, cette boue révèle des caractéristiques rhéologiques correctes (VP = 20,YV = 11), une stabilité électrique satisfaisante (1100 volts à 60 °C), et un filtrat faible, de l'ordre de 5$cm^3$ d'huile.

Malheureusement, après vieillissement à 150 °C pendant 13 jours, cette émulsion se révèle instable. Elle a en outre une forte tendance à gélifier.

Dans le brevet US-A-4 381 241, il a été aussi proposé d'utiliser un émulsifiant polydiorganosiloxane pour réaliser une émulsion inverse sans solides. Cette émulsion se révèle toutefois instable à une température de 150 °C et, dans le temps, après 24h. De plus, la phase saumure complexe $CaBr_2$-$ZnBr_2$ utilisée dans les exemples de ce brevet est très oxydante et se dégrade avec dégagement de HBr, qui réagit avec l'émulsifiant.

Dans le brevet US-A-4 421 656, il a été proposé de remédier à ces inconvénients en associant au polydiorganosiloxane servant d'émulsifiant de base une résine copolymère du type organopolysiloxane.

Aux essais, on constate toutefois que les émulsions réalisées à l'aide de cette composition présentent également un déphasage de la saumure, après un vieillissement statique à 150 °C, au-delà de 24 heures.

Avec les émulsifiants de la technique connue utilisés pour la réalisation d'émulsions inverses lourdes, utilisables dans des puits de forage, on relève généralement les inconvénients suivants :

- instabilité de l'émulsion à haute température, c'est-à-dire à une température supérieure à 150 °C, avec des phénomènes de ségrégation de phases, de précipitation de sels et de coalescence ;
- présence de solides nuisibles à l'intégrité des réservoirs, avec apparition de phénomènes de "skin" (peau).

La présente invention vise à remédier à ces inconvénients de la technique connue en proposant un émulsifiant permettant de réaliser des émulsions inverses de densité élevée, stables en pression et en température, entre une saumure lourde et une huile de faible densité qui puissent être utilisées dans des forages, sans endommager la perméabilité des réservoirs.

L'invention vise également à proposer un tel émulsifiant qui permette de réaliser une émulsion inverse de ce type entre deux phases de densité très différentes et d'éviter les problèmes de ségrégation de phases liquides, de sédimentation de gouttelettes lourdes de saumure et la coalescence des fines gouttelettes de saumure dispersées dans la phase huile.

L'invention a encore pour but la réalisation, à l'aide d'un tel émulsifiant, d'émulsions inverses lourdes sans solides, qui puissent être utilisées dans des forages pétroliers, miniers ou géothermiques, sans risque d'endommagement des réservoirs.

A cet effet, l'invention a pour objet une émulsion inverse lourde, sans solides, caractérisée en ce qu'elle comprend 10 à 70% en volume d'une phase de saumure dispersée, de densité comprise entre 1,20 et 2,77, 90 à 30% en volume d'une phase continue d'huile, et 15 à 60 g/l d'un émulsifiant de formule :

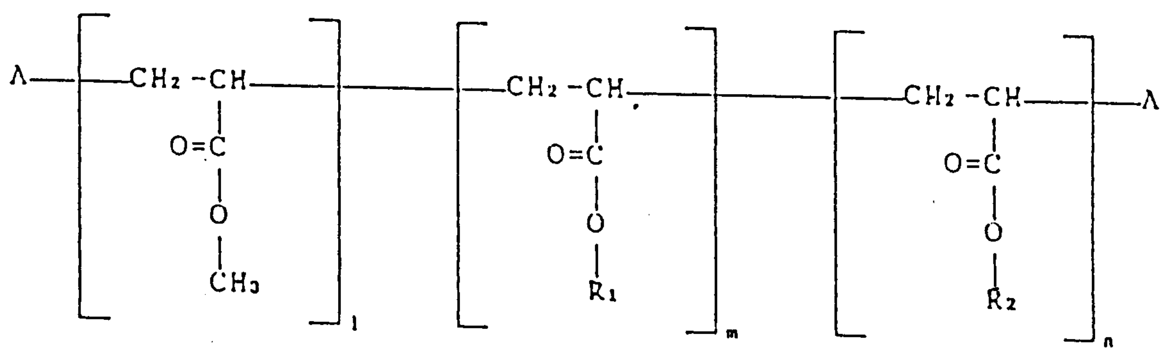

dans laquelle :

- A désigne un groupe terminal usuel pour des polyacrylates ;
- R1 est un reste d'un groupe oléyl pouvant contenir jusqu'à 20 % mol. de reste d'un groupe stéaryl ;

- $R_2$ est un reste de formule $-(C_2H_4O)_x(C_3H_6O)_y-CH_3$ ;

avec l compris entre 1 et 3, m compris entre 0,85 et 3,5, n compris entre 0,12 et 0,5, x compris entre 8 et 24, de préférence entre 10 et 16, et y compris entre 0,75 et 2,25, de préférence entre 1 et 2 ;

Ces composés ayant une masse moléculaire comprise entre 3 000 et 10 000, de préférence entre 4 000 et 8 000.

De préférence, A désigne un groupe dodécylmercaptan.

Ces composés sont notamment fabriqués par la Société allemande TH. GOLDSCHMIDT A.G. Ils sont décrits dans EP-A-0 386 507, qui a la date de dépôt du 17.02.90 et fut publiée le 12.09.90 avec la priorité du 03.03.89, de même que leur utilisation comme émulsifiants.

Dans les essais détaillés qui seront rapportés ci-après, un émulsifiant correspondant aux valeurs suivantes a été utilisé :

l = 2,0,
m = 1,75,
n = 0,25,
x = 16,
y = 1,5.

Dans la pratique, la concentration optimum d'émulsifiant dépendra de l'huile et de la saumure utilisées, ainsi que du rapport en volume huile/saumure.

La saumure pourra être une saumure simple ou complexe, composée de divers sels ou de mélanges de sels ($NaCl$, $CaCl_2$, $MgCl_2$, $CaBr_2$, $KCl$, $CaBr_2$, $ZnBr_2$, etc.).

Les émulsions conformes à l'invention sont particulièrement avantageuses, car elles permettent de résoudre notamment les problèmes suivants :

- problèmes de colmatage : l'émulsifiant est oléosoluble et permet de réaliser une émulsion inverse de saumure en phase huile ; aucun colmatage dû à des solides n'est donc à redouter au droit de réservoirs potentiels ;
- problèmes de haute pression : la masse spécifique désirée pour l'émulsion est ajoutée à l'aide de la phase saumure, simple ou complexe, et il est donc facile de modifier cette masse en adaptant la densité de la saumure ou en jouant sur le rapport des volumes huile/saumure ;
- les problèmes de température : les émulsions conformes à l'invention sont stables en température, jusqu'à au moins 150 °C, comme le montreront les essais rapportés ci-après, effectués aussi bien en régime statique que dynamique.

Un autre objet de l'invention est donc constitué par l'utilisation des émulsions conformes à l'invention dans des puits de forage, notamment de forage pétrolier. Pour cette dernière application, on mentionnera l'utilisation des émulsions comme :

- fluides de complétion,
- fluides dit de "work over",
- fluides de packer,
- fluides intermédiaires dits "spacers",
- fluides de forage,
- bouchons visqueux.

Divers exemples de mise en oeuvre de l'invention seront décrits ci-après en détail. Ces exemples visent seulement à illustrer l'invention et n'ont, bien entendu, aucun caractère limitatif.

Dans tous ces exemples, l'émulsifiant utilisé sera le composé référencé TEGOPREN LE 1733, fabriqué par la société allemande TH. GOLDSCHMIDT A.G., dont la formulation a été donnée ci-dessus.

Dans ces exemples, on se réfèrera aux dessins annexés, dans lesquels les figures 1 à 25 sont des courbes présentant les résultats des essais effectués. Chacune de ces figures sera explicitée dans l'Exemple s'y rapportant.

EXEMPLE 1

Cet exemple concerne la préparation et les caractéristiques physiques de diverses émulsions conformes à l'invention.

1.- Préparation des émulsions.

On prépare des émulsions ayant les caractéristiques suivantes :

- huile de type dit "écotoxique" (TR3), de densité 0,826,
- saumure $CaBr_2$-ZnBr2 de densité 2,31,
- rapport H/S : 50/50 en volume,
- densité finale : 1,56,
- concentration en émulsifiant TEGOPRENS LE 1733 : entre 15 et 66 g/l,
- anticorrosif : 0,4 % en poids de saumure.

L'émulsifiant est préalablement dissous dans la phase huile, sous agitation magnétique pendant 5 minutes et à température ambiante.

A l'aide d'une pompe de marque JABSCO (modèle 2182000), la saumure est incorporée lentement dans la phase huile. La solution est ensuite maintenue sous agitation pendant une durée variable suivant la quantité d'émulsion fabriquée. Pour un volume d'un litre d'émulsion, par exemple, le temps minimum d'agitation sera d'une heure.

La température du mélange est régulée au-dessous de 40 °C. Après dispersion totale de la saumure dans l'huile, on peut incorporer un anticorrosif sous mixage à l'aide de la pompe JABSCO.

2.- Essais effectués sur ces émulsions:

Les caractéristiques rhéologiques et de stabilité électrique des émulsions ont été mesurées selon les normes API, et l'on a effectué ensuite des essais de vieillissement à 150 °C (tests statiques aussi bien que dynamiques).

Les courbes de la figure 1 montrent la variation de la stabilité électrique VB en fonction de la concentration en émulsifiant, après fabrication et après maintien à 150 °C pendant 96 heures.

Il existe un seuil minimum de concentration en émulsifiant de 15 g/l au-dessous duquel l'émulsion est instable. On note une amélioration après vieillissement de la stabilité électrique, cette amélioration étant moins sensible à partir d'une concentration en émulsifiant de 45 g/l environ. La stabilité électrique se maintient après vieillissement à partir d'une concentration de 35 à 40 g/l d'émulsifiant.

Les courbes de la figure 2 illustrent les variantes de la viscosité plastique VP et de la Yield Value YV en fonction de la concentration en émulsifiant, après fabrication (courbes VP(1) ou YV(1) et après vieillissement à 150 °C pendant 96 heures (courbes VP(2) et YV(2)).

Ces caractéristiques rhéologiques seront plus importantes pour les concentrations en émulsifiant comprises entre 15 et 30 g/l. Les valeurs de VP et YV varient de façon inversement proportionnelle à la concentration en émulsifiant, après vieillissement à 150 °C.

L'augmentation importante de la concentration en émulsifiant entre 35 et 60 g/l n'a que peu d'influence sur les caractéristiques rhéologiques, aussi bien avant qu'après vieillissement.

La figure 3 est une courbe illustrant la variation de la stabilité électrique VB en régime dynamique en fonction du temps de vieillissement, pour une concentration en émulsifiant de 45g/l.

On note une augmentation très nette de la stabilité électrique de l'émulsion en fonction du temps de vieillissement. Cette évolution est moins marquée entre 60 et 96 heures.

La figure 4 représente l'évolution de la viscosité plastique VP et de la Yield Value YV en fonction du temps de vieillissement, en régime dynamique, pour une concentration en émulsifiant de 45g/l.

Ces caractéristiques rhéologiques de l'émulsion varient peu avec le vieillissement et le temps de vieillissement a donc peu d'influence sur ces caractéristiques.

Il est apparu que le système peut présenter un déphasage après vieillissement en régime statique à 150 °C, après 48 heures, alors qu'il reste stable après vieillissement à 150 °C en régime dynamique. Au-dessous de 40g/l d'émulsifiant, le système présente une instabilité après vieillissement pendant 48 heures à 150 °C en régime statique.

La figure 5 montre l'évolution de la stabilité électrique VB en régime statique et en régime dynamique, en fonction du temps, pour une concentration en émulsifiant de 45 g/l. On relève que cette stabilité électrique est plus faible en régime statique qu'en régime dynamique.

La figure 6 représente l'évolution de la viscosité plastique VP et de la Yield Value YV en fonction du temps de vieillissement pour une concentration en émulsifiant de 45g/l. On note que la viscosité plastique est stable en vieillissement dynamique, alors qu'elle a tendance à légèrement chuter en vieillissement statique. La Yield Value reste stable et n'est pas affectée par le mode de vieillissement.

On a aussi étudié l'influence du rapport volumétrique H/S (huile/saumure) sur la stabilité électrique de l'émulsion et sur ses caractéristiques rhéologiques.

La figure 7 représente l'évolution de la stabilité électrique VB en fonction du rapport H/S aussitôt après fabrication de l'émulsion et après respectivement 48 heures et 162 heures de vieillissement en régime dynamique à 150 ° C.

La figure 8 montre l'évolution de la stabilité électrique en fonction du vieillissement pour différents rapports H/S avec une concentration en émulsifiant de 45g/l.

On note que s 'est seulement pour un rapport H/S de 50/50 que le vieillissement a une influence favorable sur la stabilité.

La figure 9 illustre l'évolution de la viscosité plastique VP et de la Yield Value YV en fonction du rapport H/S après fabrication de l'émulsion (courbes VP1 et YV1) et après 162 heures de vieillissement en régime dynamique à 150 ° C. On note qu'une augmentation de la concentration en saumure accroît les caractéristiques rhéologiques de l'émulsion. Pour un rapport H/S de 40/60, la viscosité plastique s'accroît en fonction du temps de vieillissement.

La Yield Value est peu sensible au temps de vieillissement. Elle reste élevée pour des rapports H/S de 40/60 mais elle chute très rapidement dès que le rapport H/S atteint 70/30, et même à partir de 50/50.

EXEMPLE 2

Cet exemple concerne des émulsions de densité finale 1,15 réalisées avec une saumure à un seul sel ($CaBr_2$), de densité 1,49 pour un rapport en volume huile/saumure (H/S) de 50/50, et de densité 1,66 pour un volume H/S de 60/40, avec une huile HDF 200 de densité 0,817 et une concentration en émulsifiant variant de 25 à 45 g/l.

Les figures 10 et 11 représentent la variation de la stabilité électrique VB en fonction de la concentration en émulsifiant, respectivement après fabrication de l'émulsion et après vieillissement en régime dynamique à 150 ° C pendant 114 heures.

On remarque qu'immédiatement après fabrication, quel que soit le rapport H/S considéré, l'accroissement de la concentration en émulsifiant se traduit par une augmentation de stabilité électrique. Cette évolution est beaucoup plus marquée pour le rapport H/S 60/40.

Après vieillissement à 150 ° C, pendant 114 heures, les émulsions sont stables. En règle générale, la stabilité électrique reste plus élevée pour un rapport H/S de 60/40 que de 50/50.

Le vieillissement n'augmente pas les stabilités électriques. A partir de la concentration de 35 g/l d'émulsifiant, il n'y a pas d'accroissement de la stabilité que ce soit pour les rapports H/S 50/50 ou 60/40.

Les figures 12 et 13 représentent respectivement la variation de viscosité plastique VP et du Yield Value YV en fonction de la concentration en émulsifiant, pour différents rapports H/S, après fabrication de l'émulsion et après vieillissement de celle-ci en régime dynamique à 150 ° C pendant 114 heures.

On note que, après fabrication, la viscosité plastique est plus importante pour un rapport 50/50 que 60/40.

Pour un rapport H/S 50/50, l'évolution de la viscosité plastique n'est plus sensible à partir d'une concentration de 35 g/l d'émulsifiant.

Après vieillissement en régime dynamique, à 150 ° C pendant 114 heures:

- pour le rapport H/S 60/40, il n'y a pas d'augmentation sensible de VP et de YV.
- pour le rapport H/S 50/50, VP augmente sensiblement pour des concentrations d'émulsifiant comprises entre 25 et 35 g/l, puis se stabilise au-dessus de' 35 g/l jusqu'à 45 g/l. YV croît sensiblement entre 25 et 30 g/l d'émulsifiant, puis a tendance à diminuer dès que la concentration est supérieure à 30 g/l.

De plus, après vieillissement de l'émulsion, la Yield Value est plus basse, à des concentrations de 40-45 g/l d'émulsifiant, qu'à la fabrication.

Pour les deux rapports H/S de 60/40 et 50/50, la concentration en émulsifiant étant fixée à 35 g/l, on observe une sédimentation de la phase dispersée lourde après vieillissement à 150 ° C en régime statique, au bout de 70 heures. Cette sédimentation ne traduit pas un déphasage de l'émulsion, car une faible agitation suffit à réhomogéniser l'émulsion.

EXEMPLE 3

On prépare des émulsions de densité 1,15, avec de l'huile HDF 200 de densité 0,817, des saumures de densité variant entre 1,33 et 1,41 et comprenant comme sel(s) soit $CaBr_2$, soit $ZnBr_2$ soit encore le mélange $CaBr_2$-$ZnBr_2$, avec un rapport en volume huile/saumure (H/S) égal 44/56, et avec une concentration en émulsifiant égale à 35 g/l.

Les figures 14 et 15 représentent l'évolution de la stabilité électrique des émulsions en fonction du rapport H/S, respectivement après fabrication des émulsions et après vieillissement de celles-ci en régime statique à 150 °C pendant 166 heures.

On note qu'à la fabrication, la variation du rapport H/S n'entraîne pas de modifications sensibles des stabilités électriques pour les saumures à base de $CaBr_2$. Par contre, il y a chute de la stabilité électrique avec la saumure à base de $ZnBr_2$. Il y a donc des niveaux différents de stabilité en fonction de la nature des sels.

Après vieillissement à 150 °C en régime statique, pour la seule saumure $CaBr_2$, la stabilité électrique augmente. De plus, si le rapport H/S décroît (H/S <44/56), la stabilité électrique chute, ce qui confirme une déstabilisation de l'émulsion pour des rapports H/S de 35/65.

Les figures 16 et 17 d'une part, 18 et 19 d'autre part, 20 et 21 de troisième part, représentent l'évolution de la viscosité plastique VP et de la Yield Value YV des émulsions en fonction du rapport H/S, respectivement pour les émulsions à base de $CaBr_2$-$ZnBr_2$, à base de $ZnBr_2$ et à base de $CaBr_2$, après fabrication des émulsions et après vieillissement de celles-ci en régime statique à 150 °C pendant 166 heures.

On note qu'après fabrication, la diminution du rapport H/S se traduit par une forte diminution de la viscosité de l'émulsion, ceci quel que soit le type de saumure utilisée.

Après vieillissement à 150 °C en régime statique, la variation du rapport H/S, dans le sens d'une diminution du rapport H/S, a pour conséquences :

- une chute de VP et de YV quel que soit le type de saumure ;
- une diminution de YV, plus sensible pour la saumure $ZnBr_2$ que pour les deux autres saumures $CaBr_2$ ou $CaBr_2$-$ZnBr_2$ ;
- une évolution de VP non continue pour la saumure $CaBr_2$, avant et après vieillissement, sauf pour le rapport H/S 40/60 ;
- une tendance de la viscosité plastique à chuter pour les deux saumures à base de $CaBr_2$-$ZnBr_2$ et $ZnBr_2$, aussi bien avant qu'après vieillissement.

EXEMPLE 4

Cet exemple concerne l'effet d'une contamination d'une émulsion stable conforme à l'invention par une argile FGN ou par de l'eau douce.

On a utilisé une émulsion ayant une densité finale de 1,15, comprenant, dans un rapport en volume H/S de 40/60, une huile HDF 200 de densité 0,817, une saumure à base de $CaBr_2$ de densité 1,376 et une concentration en émulsifiant de 35 g/l.

Des essais de contamination avec l'argile de charge FGN ont été effectués avec des taux d'argile de 25, 50, 75, 100, 125 et 150 g/l d'émulsion.

On ne relève pas de déphasage de l'émulsion, même après un ajout de 150 g/l d'argile.

Les effets de la contamination de l'émulsion pour l'argile sont illustrés par la figure 22, qui montre les variations de la stabilité électrique VB en fonction du taux d'argile ajouté, exprimé en g/l d'émulsion, et par la figure 23, qui montre les variations de la viscosité plastique VP et de la Yield Value en fonction également, du taux d'argile. Dans les deux cas les essais ont été effectués après vieillissement de l'émulsion à 150 °C, pendant 72 heures, en régime dynamique.

Dès que la concentration d'argile est supérieure à 50 g/l, on note une très forte chute de la stabilité électrique. Cette diminution de stabilité, n'entraine pas de déphasage de l'émulsion. Aucune sédimentation n'est à remarquer après 24 heures de repos. Après vieillissement de 24 heures à 150 °C en régime dynamique, l'émulsion reste stable.

VP et YV restent stables après une contamination d'argile jusqu 'à des concentrations de 100 g/l. Au-delà de cette concentration, la contamination est trop importante et engendre des valeurs très élevées de YV et de VP.

Avec la même émulsion, des essais de contamination à l'eau douce ont été effectués avec 0, 2, 4, 6, 8 et 10% en volume total d'eau douce par rapport à l'émulsion, ce qui se traduit pas des rapports H/S variant de 40/60 à 36/64.

La figure 24 montre les variations de la stabilité électrique en fonction de la contamination en eau exprimée en % en volume, après un vieillissement en régime dynamique de l'émulsion pendant 72 heures à 150 °C.

On ne relève pas de variation notable de la stabilité électrique jusqu'à une contamination de 10 % en volume d'eau douce.

La figure 25 montre les variations de la viscosité plastique VP et de la Yield Value de l'émulsion YV en fonction du taux de contamination en eau douce, exprimé en % en volume d'eau, après vieillissement de l'émulsion en régime dynamique pendant 72 heures à 150 ° C.

On relève une augmentation continue des caractéristiques rhéologiques (VP et YV) dès que l'on contamine à l'eau l'émulsion. Cette variation devient très importante à partir de 4 % de contamination par de l'eau.

EXEMPLE 5

Cet exemple est destiné à illustrer l'intérêt de ces fluides à émulsion inverse sans solide utilisés comme fluide de complétion dans les forages pétroliers.

Les essais ont été effectués sur une cellule de mesure de perméabilité de type Hassler.

Le montage Hassler consiste à placer un échantillon de terrain (carotte) dans un tube souple en caoutchouc. A chaque extrémité, la carotte est prolongée par des têtes en acier qui permettent d'injecter ou de recueillir des fluides à chaque extrémité et de mesurer la pression. L'étanchéité est assurée par un gonflage avec un liquide en pression.

Le calcul de la perméabilité se fait par application de la loi de Darcy.

Pour un carotte donnée (caractéristiques géométriques fixées), à température constante, la perméabilité est fonction de la pression différentielle et du débit du fluide dans la carotte.

Avec l'utilisation d'une pompe à débit constant, la mesure de perméabilité revient à mesurer les variations de pression différentielle dans la carotte.

L'émulsion utilisée avait une densité de 1,57 et était constituée d'une huile TR3 et d'une saumure à base de $CaBr_2$-$ZnBr_2$ avec un rapport H/S de 50/50, avec 30g/l d'émulsifiant. L'émulsion avait subi un vieillissement de 72 heures à 150 ° C en régime dynamique.

Les essais normalisés ont été faits dans les conditions suivantes :

Préparation des carottes (échantillons de terrain)

- carottage (diamètre 40mm -longueur 60mm).
- séchage pendant 16h à 100 ° C.
- nettoyage et lavage des carottes au toluène.
- séchage pendant 16h à 100 ° C.
- saturation au Kerdane (marque déposée) sous vide, pendant 24h.

Perméabilité initiale dans les deux sens A B

- mesure de la perméabilité initiale (Ki) avec une coupe de distillation (185 ° C-235 ° C) de type Kerdane.
- mesure de la perméabilité dans les deux sens de haut (A) en bas (B), et de bas (B) en haut (A), a température stabilisée 65 ° C, et à débit constant on mesure et on enregistre la pression, la température, et le débit.

Colmatage dans le sens A vers B (A B)

Sous une pression de $25.10^5$ Pa, on injecte le fluide testé (émulsion inverse), pendant 1h30 et à une température de 65 ° C, jusqu'à apparition du filtrat.

Décolmatage dans le sens B A

On purge le fluide restant dans le circuit et on injecte du Kerdane, sous une presion de $35.10^5$ Pa, à une température de 65 ° C, pandant 10 minutes.

Perméabilité retour dans les deux sens B A

- la mesure de la perméabilité s'effectue à température stabilisée à 65 ° C, sous débit constant et pression constante, sous injection de Kerdane.

Les résultats obtenus apparaissent dans le tableau ci-après.

TABLEAU

| | Perméabilité | |
|---|---|---|
| | première carotte | deuxième carotte |
| $Ki_{B \rightarrow A}$ | 331 mda | 50 mda |
| $Kr_{B \rightarrow A}$ | 287 mda | 27 mda |
| $\frac{Kr_{B \rightarrow A}}{Ki_{B \rightarrow A}}$ % Restauration | 86,7% | 54 % |
| $Ki_{A \rightarrow B}$ | 411 mda | 50 mda |
| $Kr_{A \rightarrow B}$ | 140 mda | 28,5 mda |
| % envahissement $1-\frac{Kr_{A \rightarrow B}}{Ki_{A \rightarrow B}}$ | 66 % | 43 % |

Ces résultats montrent que cette émulsion est peu colmatante pour des carottes présentant une perméabilité initiale de 400 mda (grès de Fontainebleau).

## Revendications

1. Emulsion inverse lourde, sans solides, caractérisée en ce qu'elle comprend 10 à 70% en volume d'une phase de saumure dispersée, de densité comprise entre 1,20 et 2,77, 90 à 30% en volume d'une phase continue d'huile, et 15 à 60 g/l de l'émulsifiant constitué par un composé de formule :

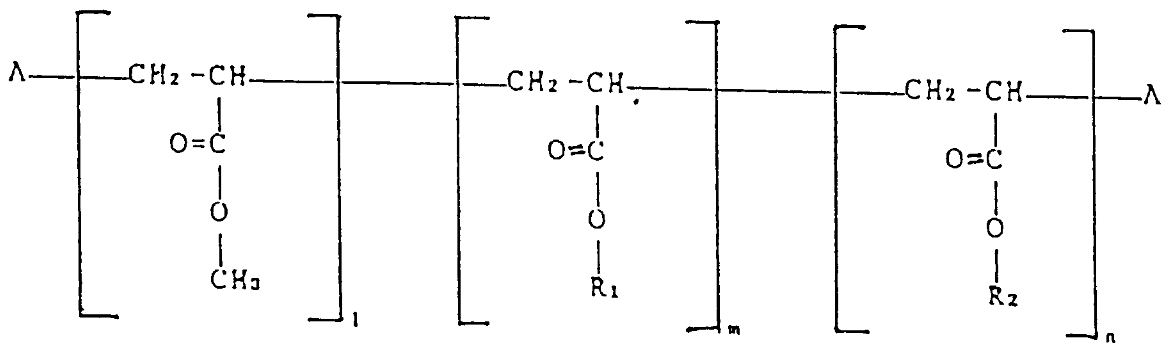

dans laquelle :

- A désigne un groupe terminal usuel pour des polyacrylates ;
- R1 est un reste d'un groupe oléyl pouvant contenir jusqu'à 20 % mol. de restes de groupes stéaryl ;
- $R_2$ est un reste de formule $-(C_2H_4O)_x(C_3H_6O)_y-CH_3$ ;

avec l compris entre 1 et 3, m compris entre 0,85 et 3,5, n compris entre 0,12 et 0,5, x compris entre 8 et 24, de préférence entre 10 et 16, et y compris entre 0,75 et 2,25, de préférence entre 1 et 2 ;

ces composés ayant une masse moléculaire comprise entre 3 000 et 10 000, de préférence entre 4 000 et 8 000.

**2.** Emulsion selon la revendication 1, caractérisée en ce que dans ledit composé, A désigne un groupe dodécylmercaptan.

**3.** Emulsion selon l'une des revendications 1 et 2, caractérisée en ce que, dans ledit composé :

l = 2,0
m = 1,75
n = 0,25
x = 16
y = 1,5.

**4.** Emulsion selon l'une des revendications 1 à 3, caractérisée en ce que la saumure comprend des sels ou mélanges de sels choisis dans le groupe constitué par NaCl, $CaCl_2$, $MgCl_2$, $CaBr_2$, KCl, $CaBr_2$, $ZnBr_2$.

**5.** Utilisation des émulsions selon l'une des revendications précédentes, dans des puits de forage, notamment de forage pétrolier.

**Claims**

**1.** Heavy inverse emulsion, without solids, characterized in that it comprises 10 to 70 % by volume of a dispersed brine phase, having a density of between 1.20 and 2.77, 90 to 30 % by volume of an oil containing phase, and 15 to 60 g/l of the emulsifier consisting of a compound of formula :

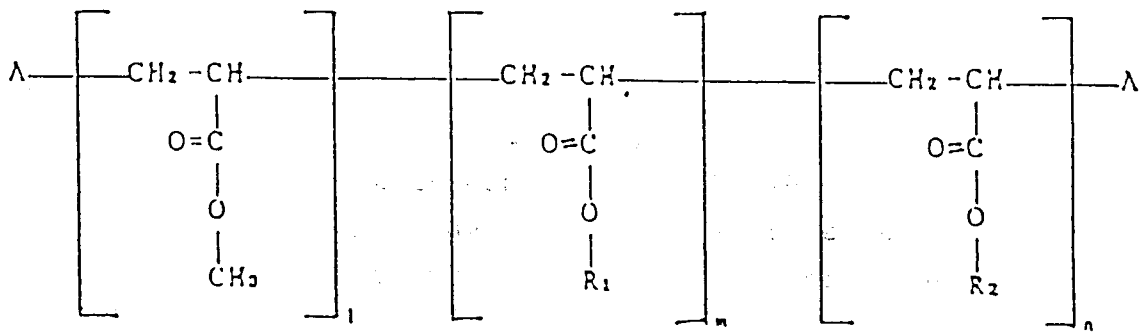

in which :

- A denotes a usual end group for polyacrylates;
- R1 is an oleyl group residue which may contain up to 20 mol % of stearyl group residues;
- R2 is a residue having the formula $-(C_2H_4O)_x(C_3H_6O)-CH_3$;

with 1 being between 1 and 3, m being between 0.85 and 3.5, n being between 0.12 and 0.5, x being between 8 and 24, preferably between 10 and 16, and y being between 0.75 and 2.25, preferably between 1 and 2;

these compounds having a molecular weight of between 3,000 and 10,000, preferably between 4,000 and 8,000.

**2.** Emulsion according to claim 1, characterized in that in the said compound, A denotes a dodecylmercaptan group.

**3.** Emulsion according to either of claims 1 or 2, characterized in that, in the said compound :

1 = 2.0
m = 1.75
n = 0.25
x = 16
y = 1.5

**4.** Emulsion according to one of claims 1 to 3, characterized in that the brine comprises salts or mixtures of salts selected from the group consisting of NaCl, $CaCl_2$, $MgCl_2$, $CaBr_2$, KCl, $CaBr_2$, $ZnBr_2$.

**5.** Use of emulsions according to one of the preceding claims in drilling wells, in particular oil drilling wells.

## Patentansprüche

**1.** Umkehremulsion hoher Dichte und ohne Feststoffe,
**dadurch gekennzeichnet,**
daß sie durch 10 bis 70 Volumen-% einer dispergierten Salzlösungsphase einer zwischen 1,20 und 2,77 liegenden Dichte, durch 90 bis 30 Volumen-% einer Öl enthaltenden Phase und 15 bis 60 g/l eines Emulgators gebildet ist, der aus einer Verbindung der Formel besteht:

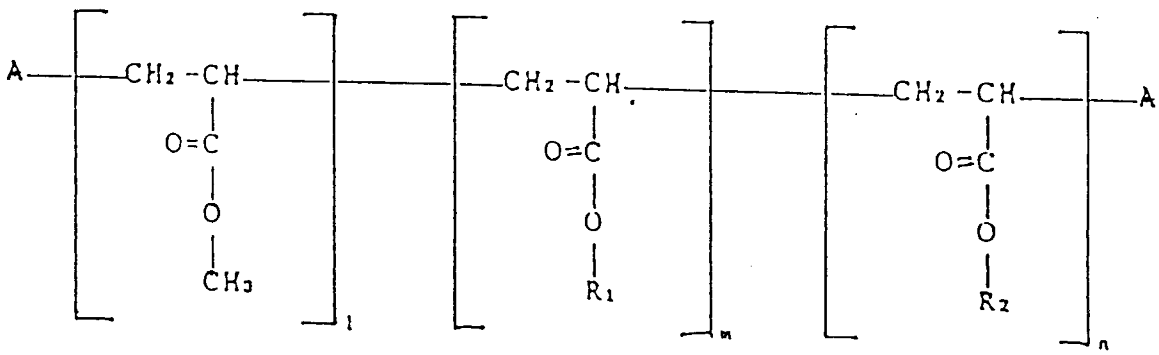

in der:

- A eine für Polyacrylate übliche Endgruppe bezeichnet;
- $R_1$ ein Rest der Oleylgruppe ist, der bis zu 20 Mol-% von Stearylgruppen-Resten enthalten kann;
- $R_2$ ein Rest der Formel $(C_2H_4O)_x(C_3H_6O)_y$-$CH_3$ ist,

wobei $\underline{l}$ zwischen 1 und 3, $\underline{m}$ zwischen 0,85 und 3,5, $\underline{n}$ zwischen 0,12 und 0,5, $\underline{x}$ zwischen 0 und 24, vorzugsweise zwischen 10 und 16, und $\underline{y}$ zwischen 0,75 und 2,25, vorzugsweise zwischen 1 und 2 betragen,
und diese Verbindungen eine molekulare Masse (Molekulargewicht) zwischen 3.000 und 10.000, vorzugsweise zwischen 4.000 und 8.000 aufweisen.

**2.** Emulsion nach Anspruch 1, dadurch gekennzeichnet, daß A in der Verbindungsformel eine Dodezylmercaptan-Gruppe bezeichnet.

**3.** Emulsion nach Anspruch 1 oder 2, dadurch gekennzeichnet, daß in der Verbindung

$l = 2,0$
$m = 1,75$
$n = 0,25$
$x = 16$
$y = 1,5$ betragen.

**4.** Emulsion nach einem der Ansprüche 1 bis 3, dadurch gekennzeichnet, daß die Salzlösung Salze oder Salzmischungen enthält, die aus der durch NaCl, $CaCl_2$, $MgCl_2$, $CaBr_2$, KCl, $CaBr_2$, $ZnBr_2$ gebildeten Gruppe ausgewählt sind.

**5.** Verwendung von Emulsionen nach einem der vorhergehenden Ansprüche in Erdbohrungen, insbesondere Erdölbohrungen.

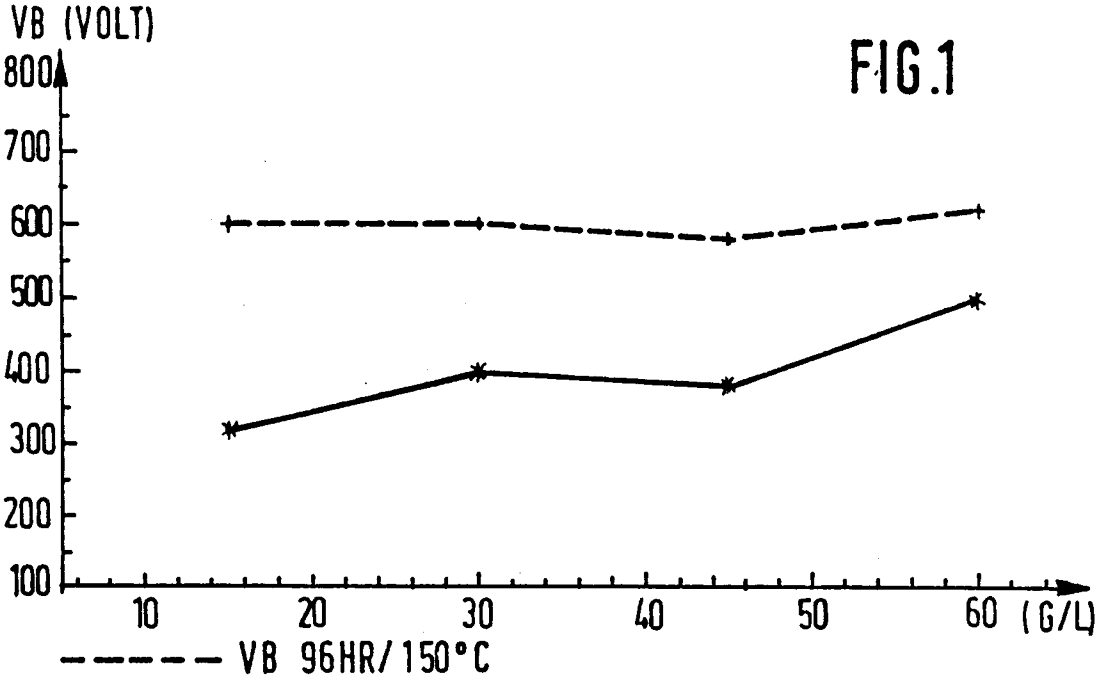


FIG.1

- - - - - VB 96HR/150°C
———— VB APRES FABRICATION

CONCENTRATION EN EMULSIFIANT

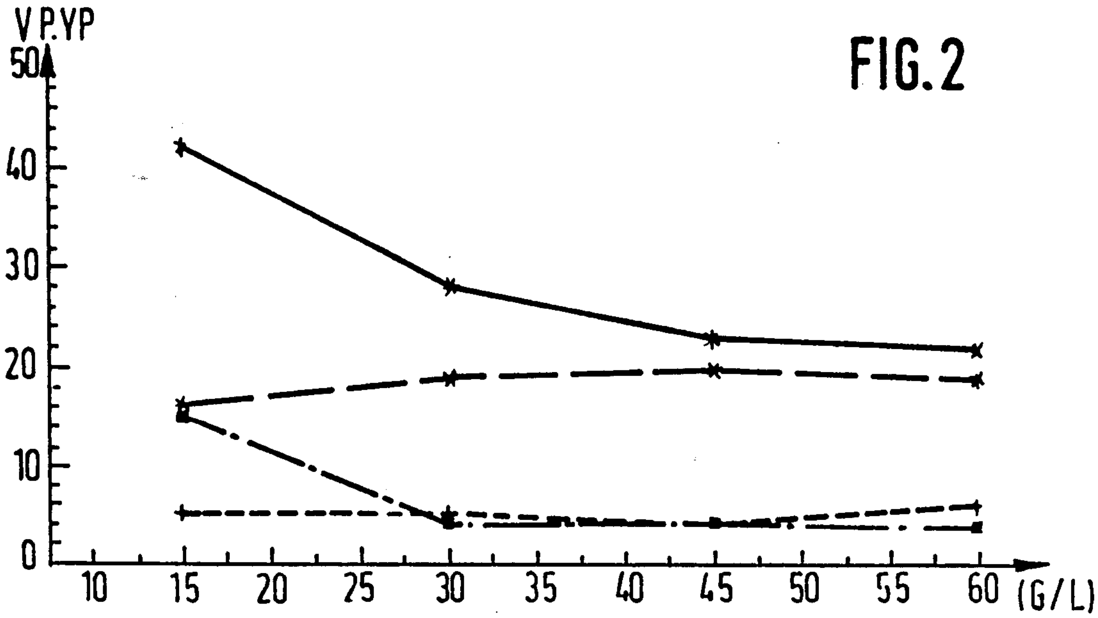


FIG.2

— — VP(1)
- - - - YV(1)
———— VP(2)
—·— YV(2)

CONCENTRATION EN EMULSIFIANT

FIG.3

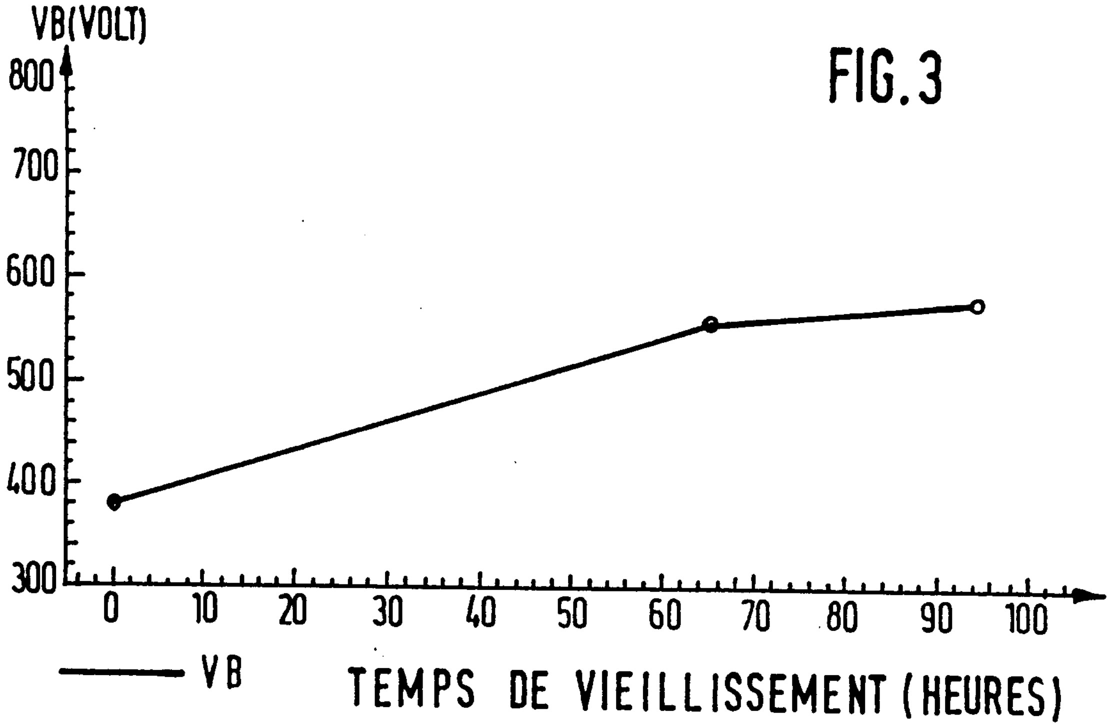
VB(VOLT)
800
700
600
500
400
300
0 10 20 30 40 50 60 70 80 90 100
VB
TEMPS DE VIEILLISSEMENT (HEURES)

FIG.4

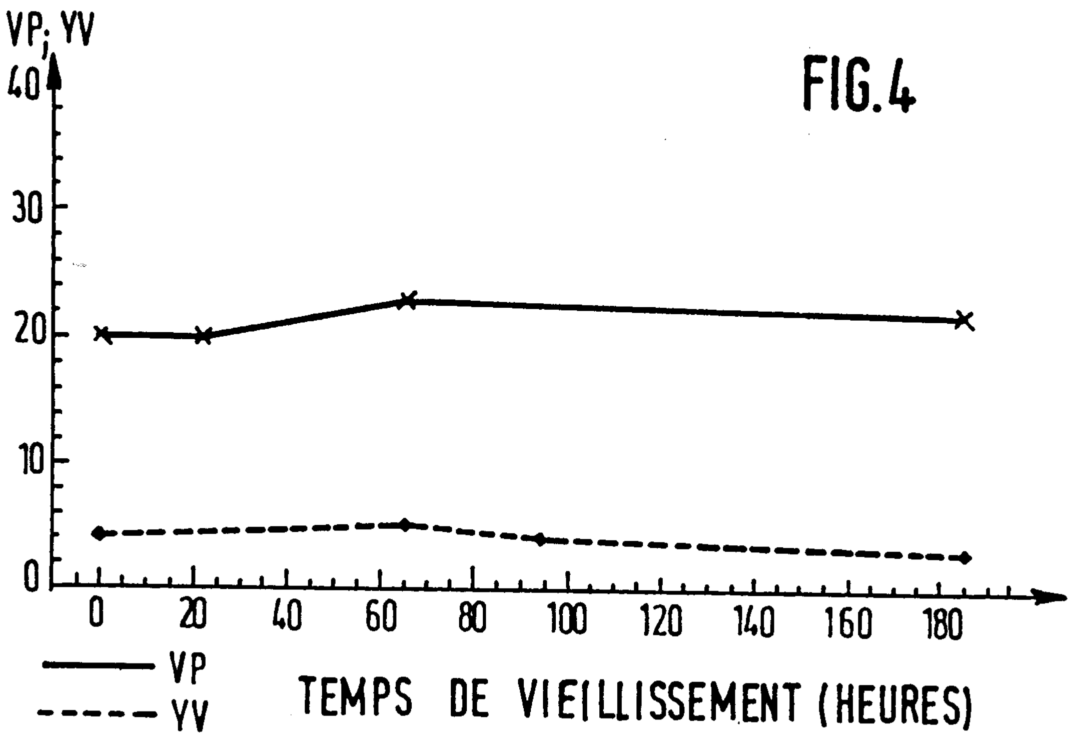
VP; YV
40
30
20
10
0
0 20 40 60 80 100 120 140 160 180
VP
YV
TEMPS DE VIEILLISSEMENT (HEURES)

FIG.5

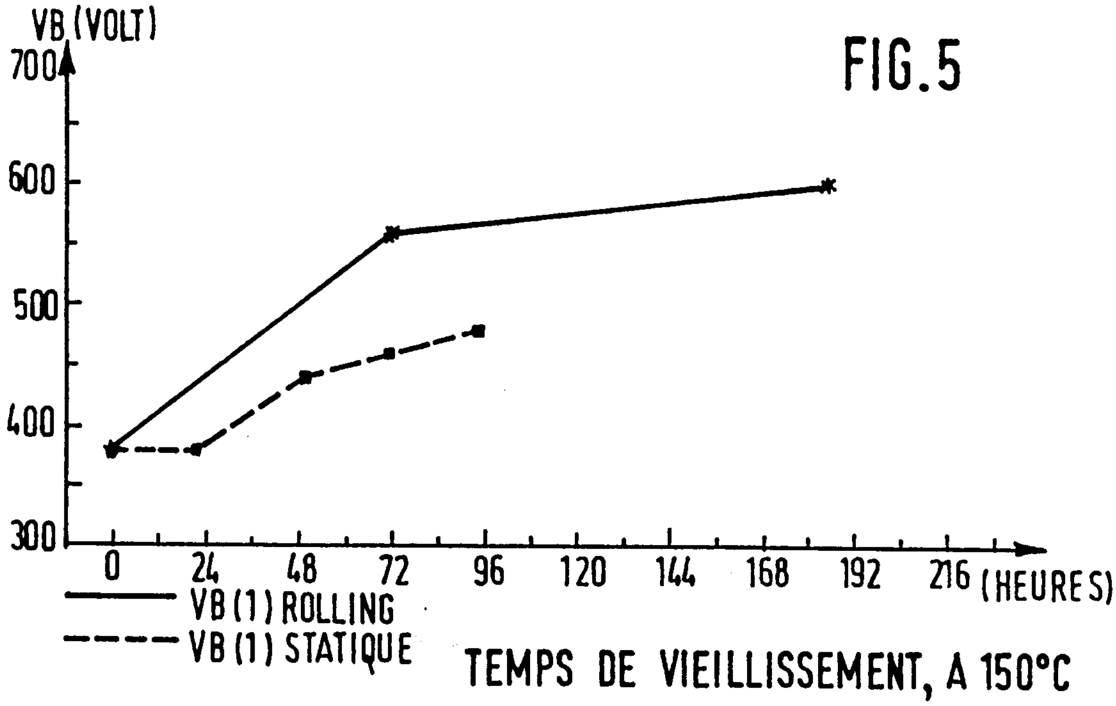
VB (VOLT)
700
600
500
400
300
0
24
48
72
96
120
144
168
192
216
(HEURES)
VB (1) ROLLING
VB (1) STATIQUE
TEMPS DE VIEILLISSEMENT, A 150°C

FIG.6

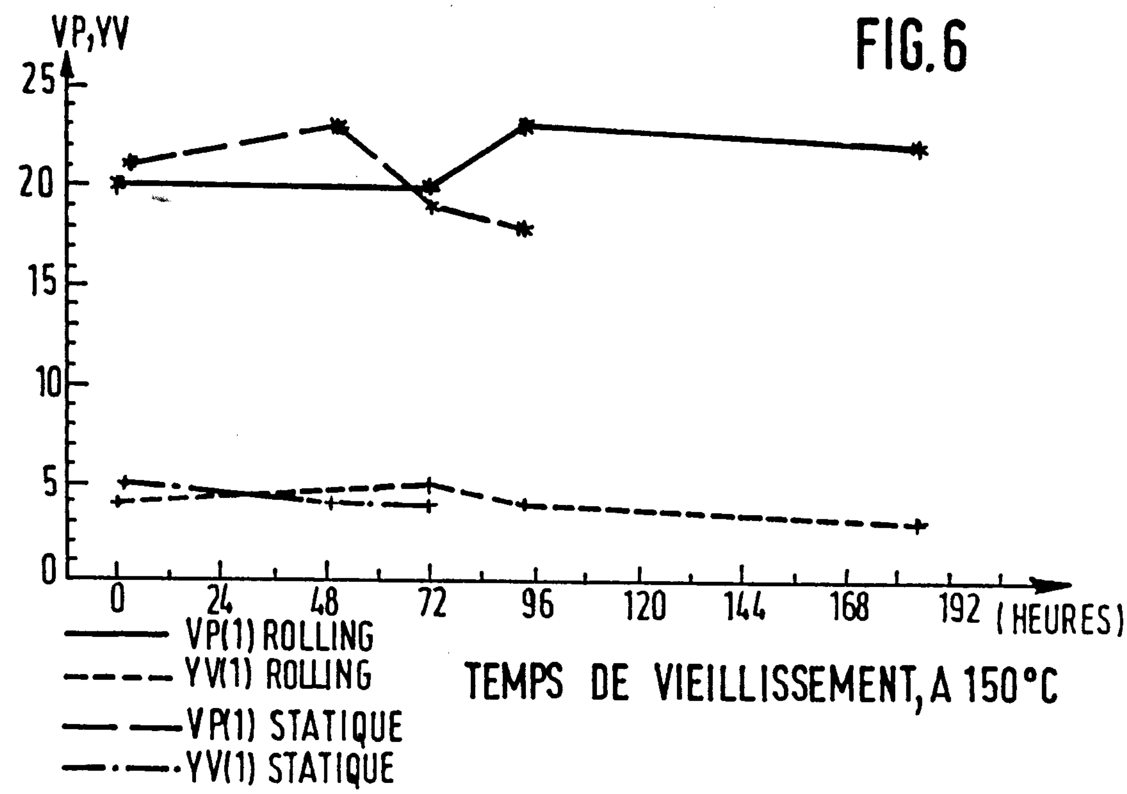
VP,YV
25
20
15
10
5
0
0
24
48
72
96
120
144
168
192
(HEURES)
VP(1) ROLLING
YV(1) ROLLING
VP(1) STATIQUE
YV(1) STATIQUE
TEMPS DE VIEILLISSEMENT, A 150°C

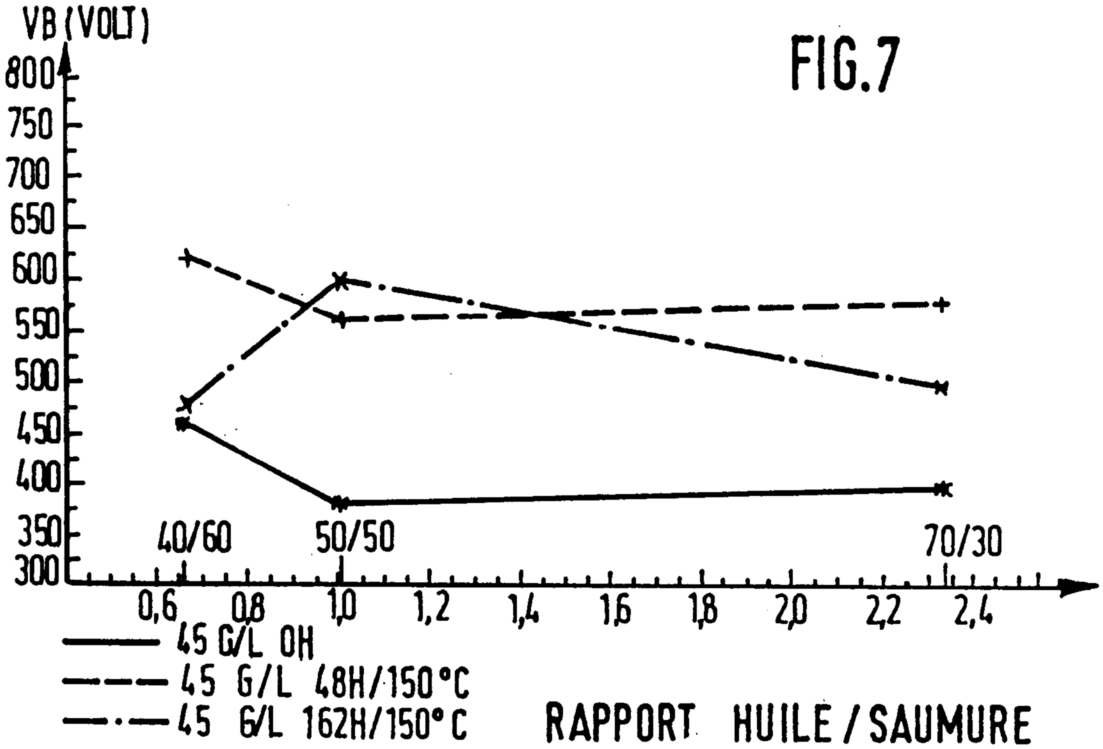
VB (VOLT)
800
750
700
650
600
550
500
450
400
350
300
40/60
50/50
70/30
0,6
0,8
1,0
1,2
1,4
1,6
1,8
2,0
2,2
2,4
45 G/L 0H
45 G/L 48H/150°C
45 G/L 162H/150°C
RAPPORT HUILE / SAUMURE

FIG.7

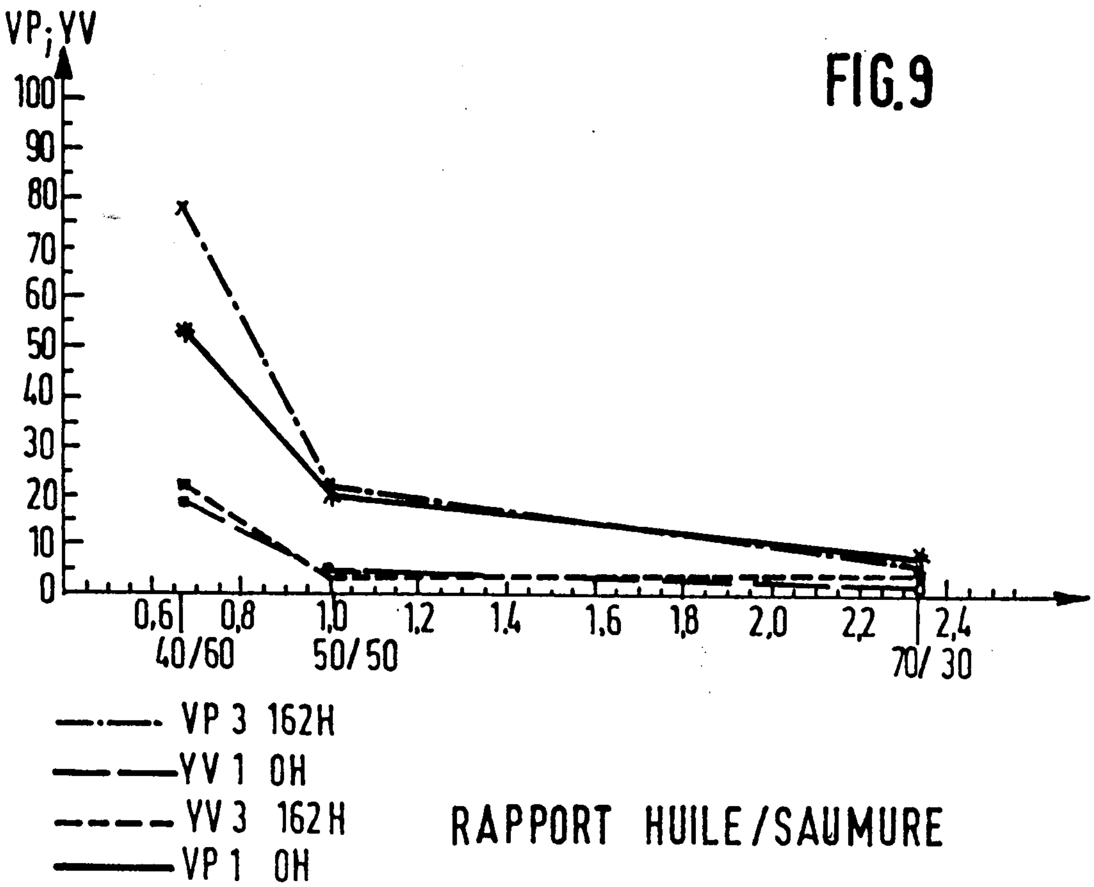
VP; YV
100
90
80
70
60
50
40
30
20
10
0
0,6
0,8
1,0
1,2
1,4
1,6
1,8
2,0
2,2
2,4
40/60
50/50
70/30
VP 3 162H
YV 1 0H
YV 3 162H
VP 1 0H
RAPPORT HUILE/SAUMURE

FIG.9

FIG.8

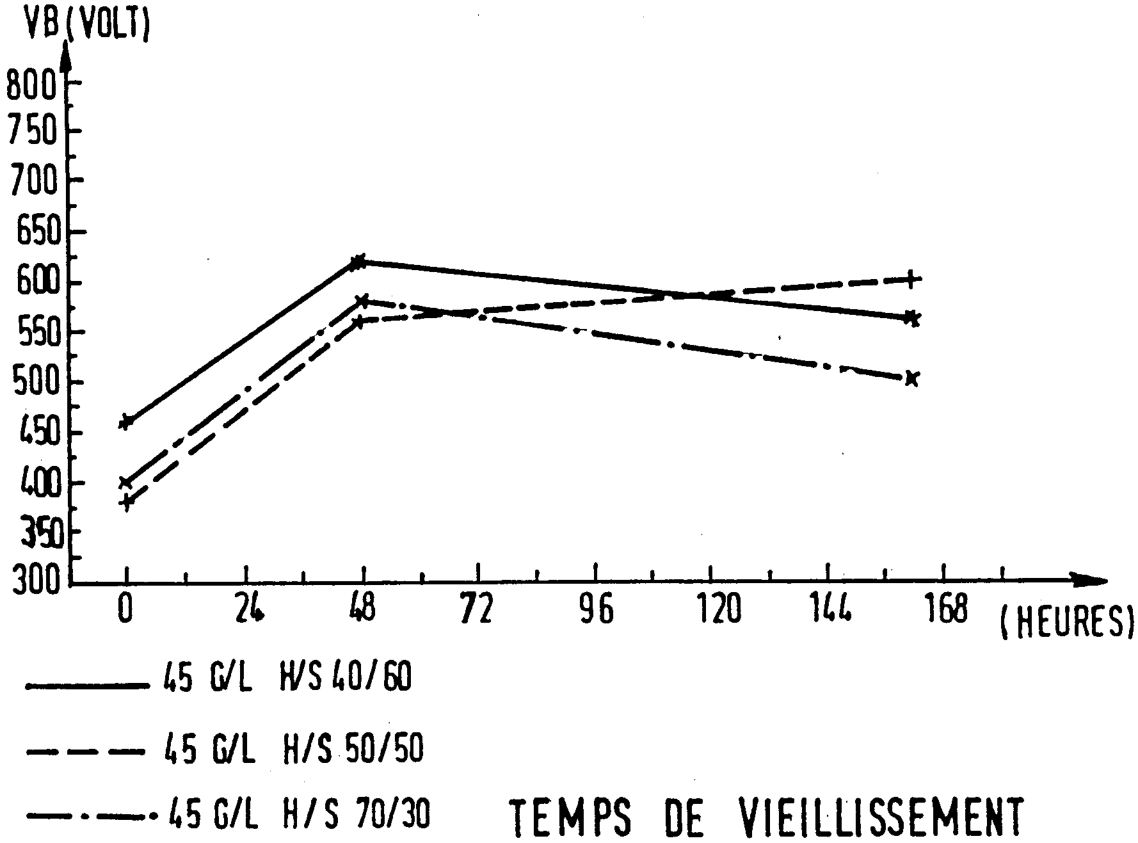
VB (VOLT)
800
750
700
650
600
550
500
450
400
350
300
0
24
48
72
96
120
144
168
(HEURES)
45 G/L H/S 40/60
45 G/L H/S 50/50
45 G/L H/S 70/30
TEMPS DE VIEILLISSEMENT

FIG.10

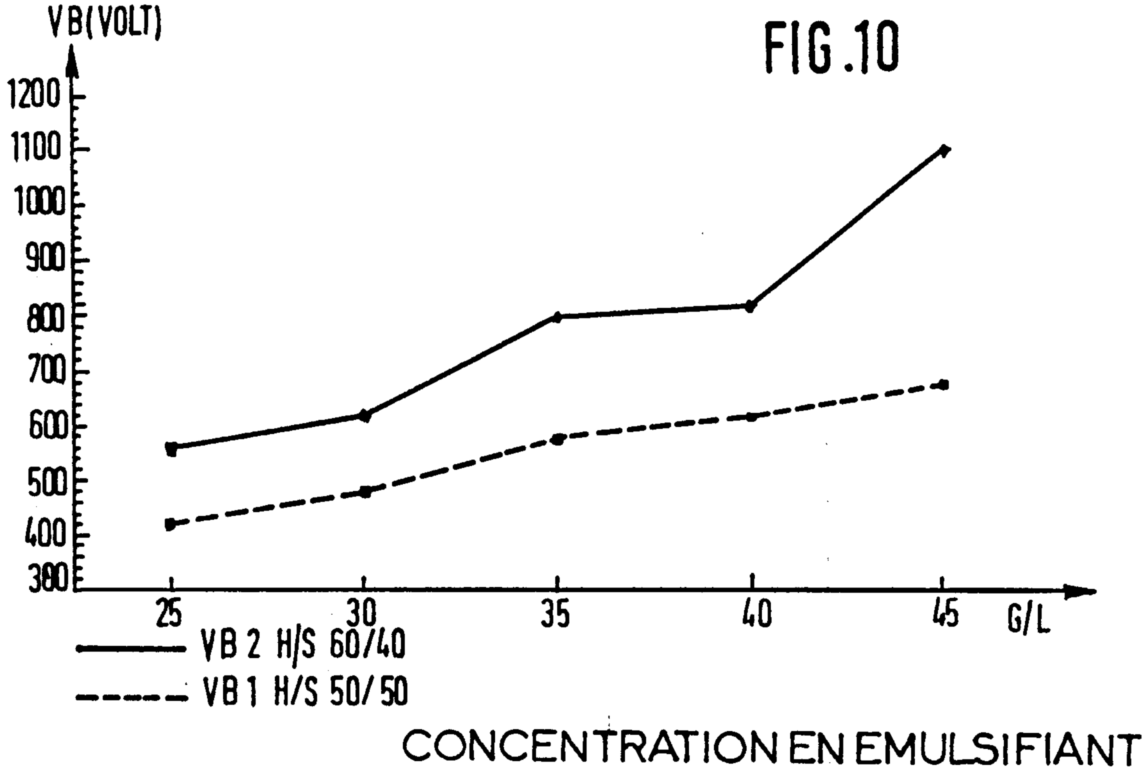
VB(VOLT)
1200
1100
1000
900
800
700
600
500
400
300
25
30
35
40
45
G/L
VB 2 H/S 60/40
VB 1 H/S 50/50
CONCENTRATION EN EMULSIFIANT

FIG.11

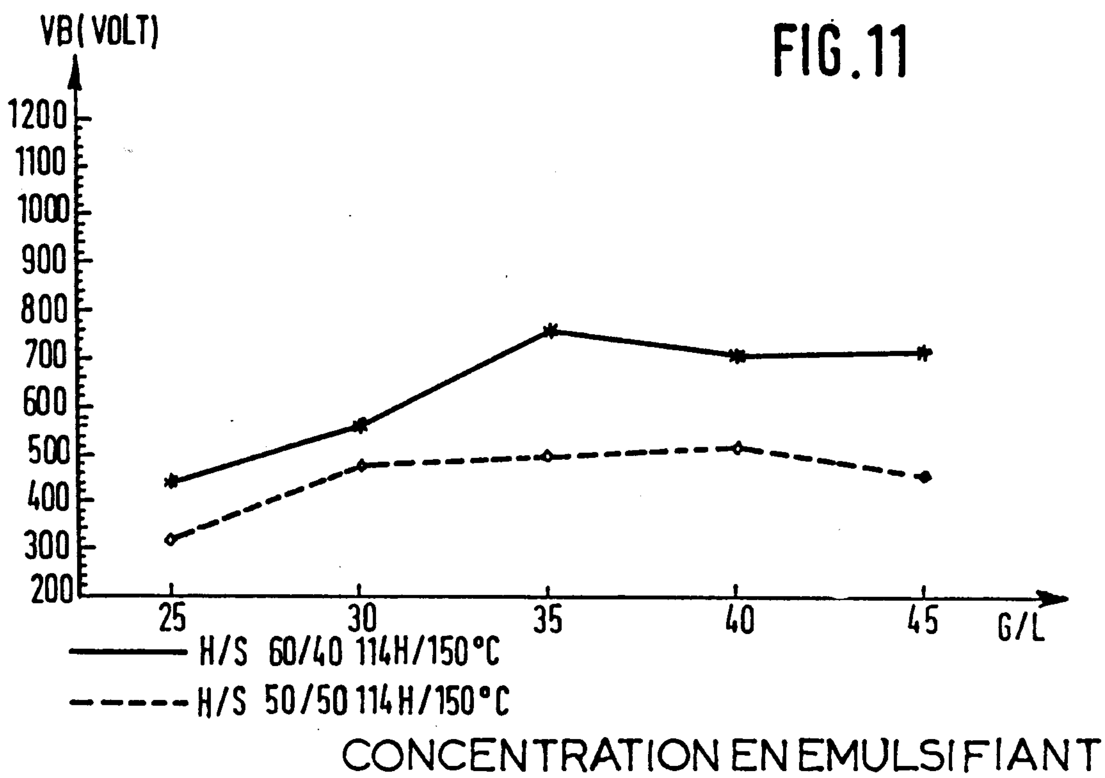
VB(VOLT)
1200
1100
1000
900
800
700
600
500
400
300
200
25
30
35
40
45
G/L
H/S 60/40 114H/150°C
H/S 50/50 114H/150°C
CONCENTRATION EN EMULSIFIANT

FIG.12

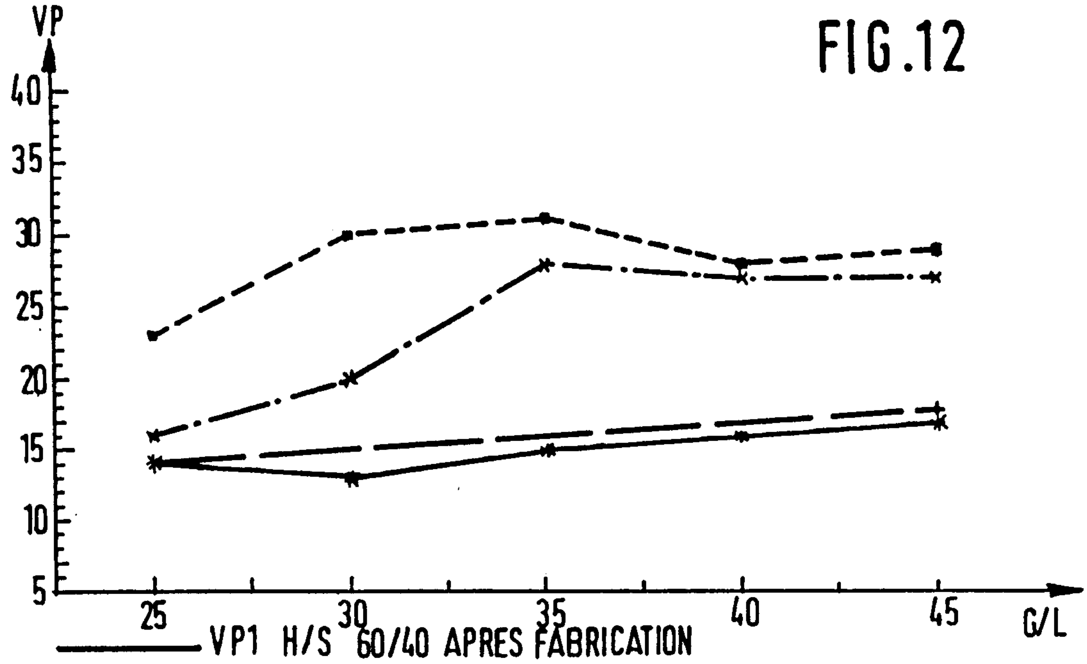


VP1 H/S 60/40 APRES FABRICATION
VP1V H/S 60/40 114H/150°C
VP2 H/S 50/50 APRES FABRICATION
VP 2V H/S 50/50 114H/150°C

CONCENTRATION EN EMULSIFIANT TG LE 1733

FIG.13

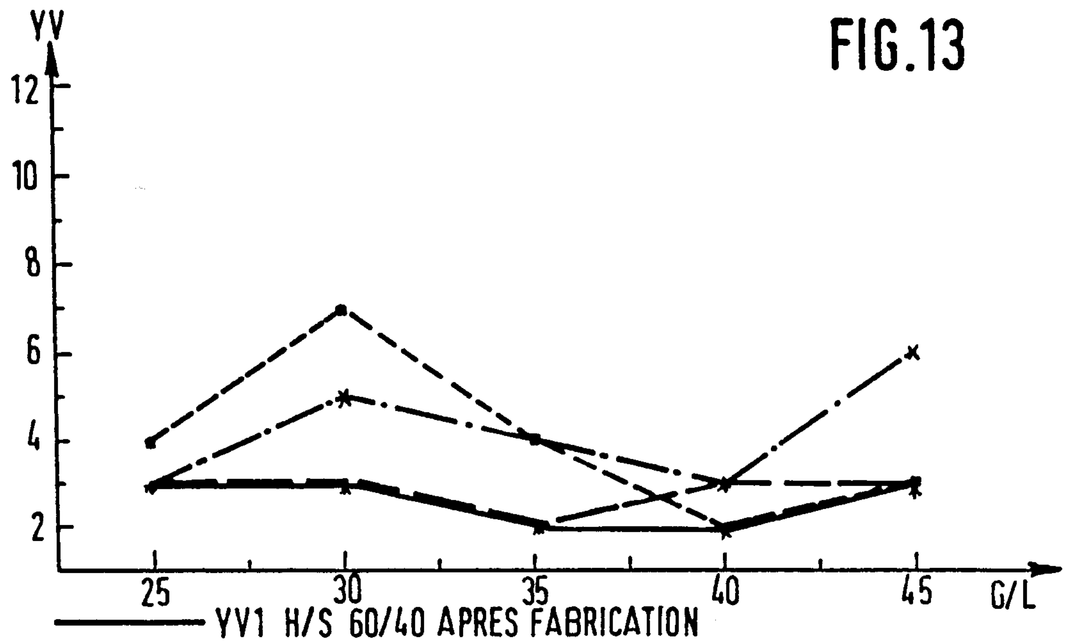


YV1 H/S 60/40 APRES FABRICATION
YV1V H/S 60/40 114H/150°C
YV2 H/S 50/50 APRES FABRICATION
YV 2V H/S 50/50 114H/150°C

CONCENTRATION EN EMULSIFIANT TG LE 1733

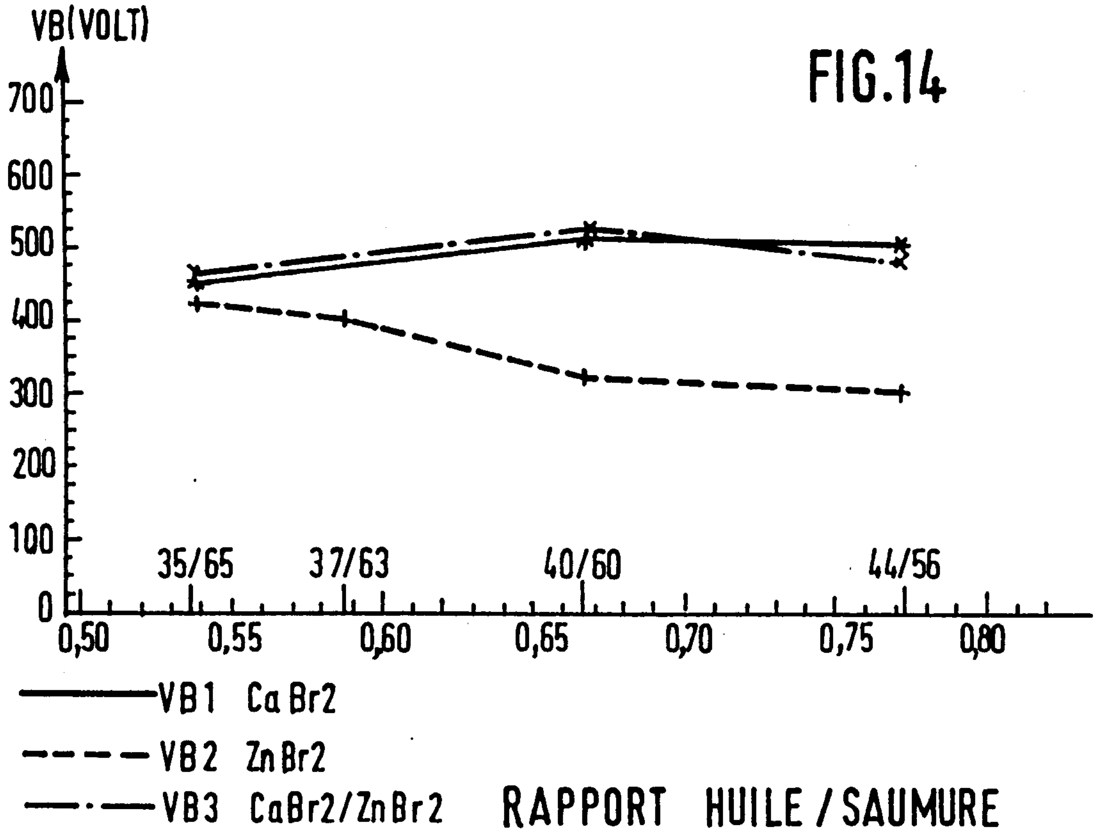
VB(VOLT)
700
600
500
400
300
200
100
0
35/65
37/63
40/60
44/56
0,50
0,55
0,60
0,65
0,70
0,75
0,80
VB1 CaBr2
VB2 ZnBr2
VB3 CaBr2/ZnBr2
RAPPORT HUILE / SAUMURE

FIG.14

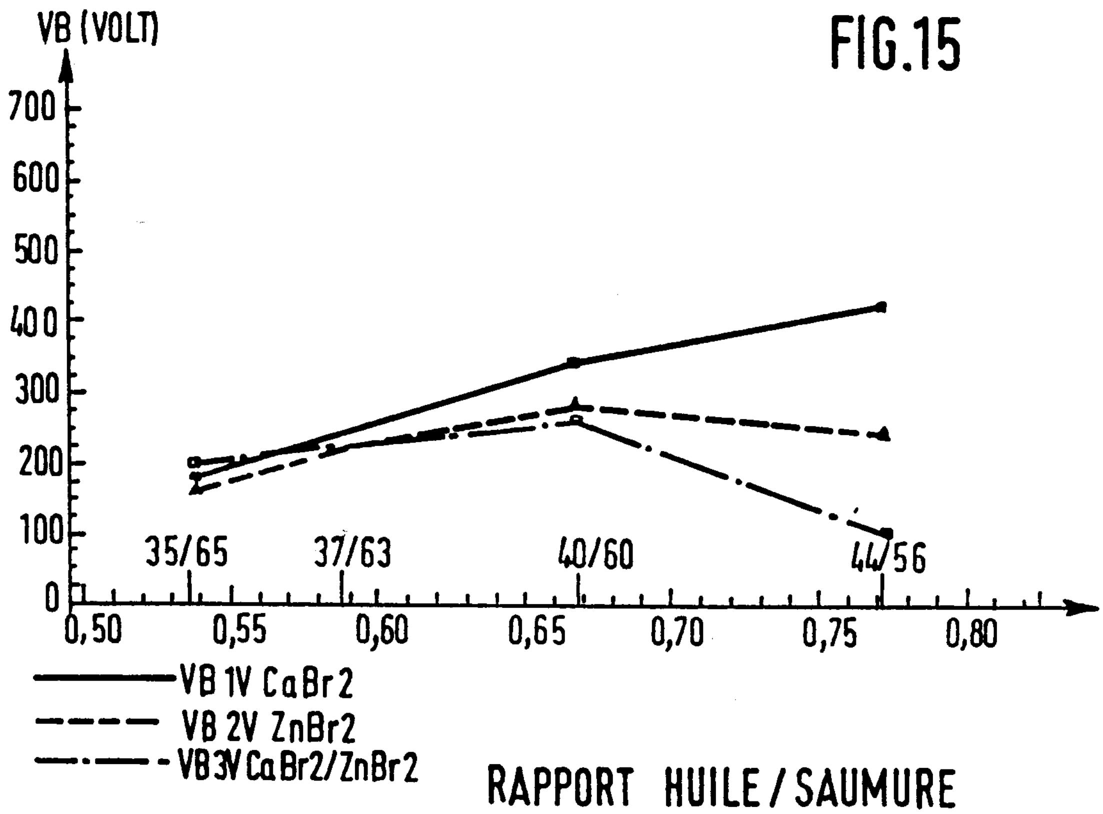
VB (VOLT)
700
600
500
400
300
200
100
0
35/65
37/63
40/60
44/56
0,50
0,55
0,60
0,65
0,70
0,75
0,80
VB 1V CaBr2
VB 2V ZnBr2
VB3V CaBr2/ZnBr2
RAPPORT HUILE / SAUMURE

FIG.15

FIG.16

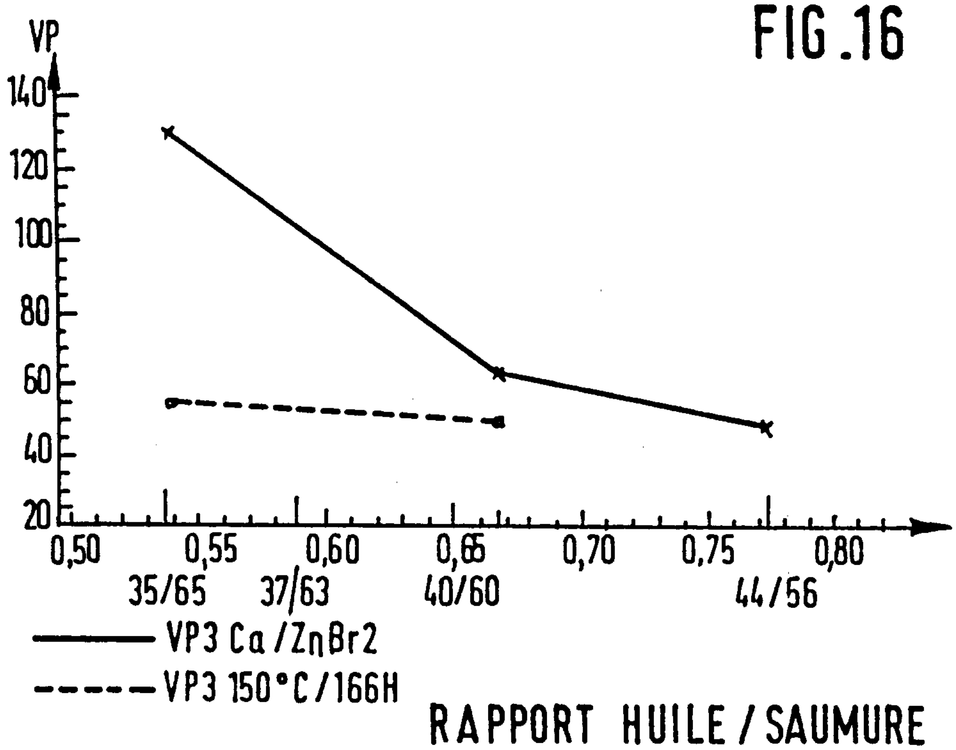
VP
140
120
100
80
60
40
20
0,50
0,55
0,60
0,65
0,70
0,75
0,80
35/65
37/63
40/60
44/56
VP3 Ca/ZnBr2
VP3 150°C/166H
RAPPORT HUILE/SAUMURE

FIG.17

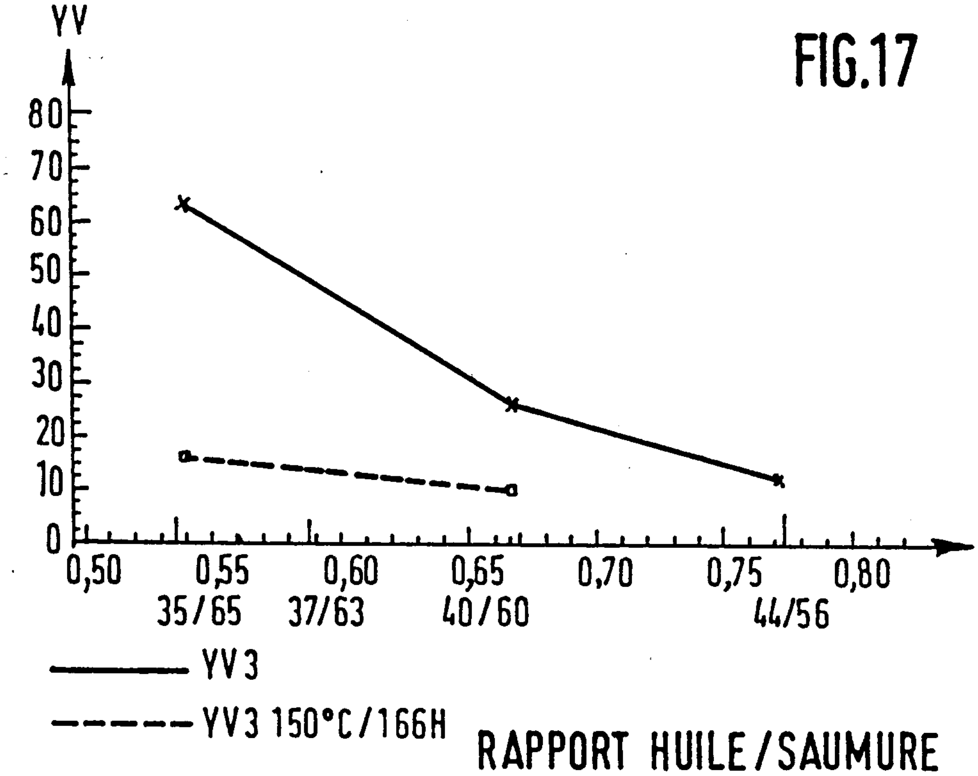
YV
80
70
60
50
40
30
20
10
0
0,50
0,55
0,60
0,65
0,70
0,75
0,80
35/65
37/63
40/60
44/56
YV3
YV3 150°C/166H
RAPPORT HUILE/SAUMURE

FIG.18

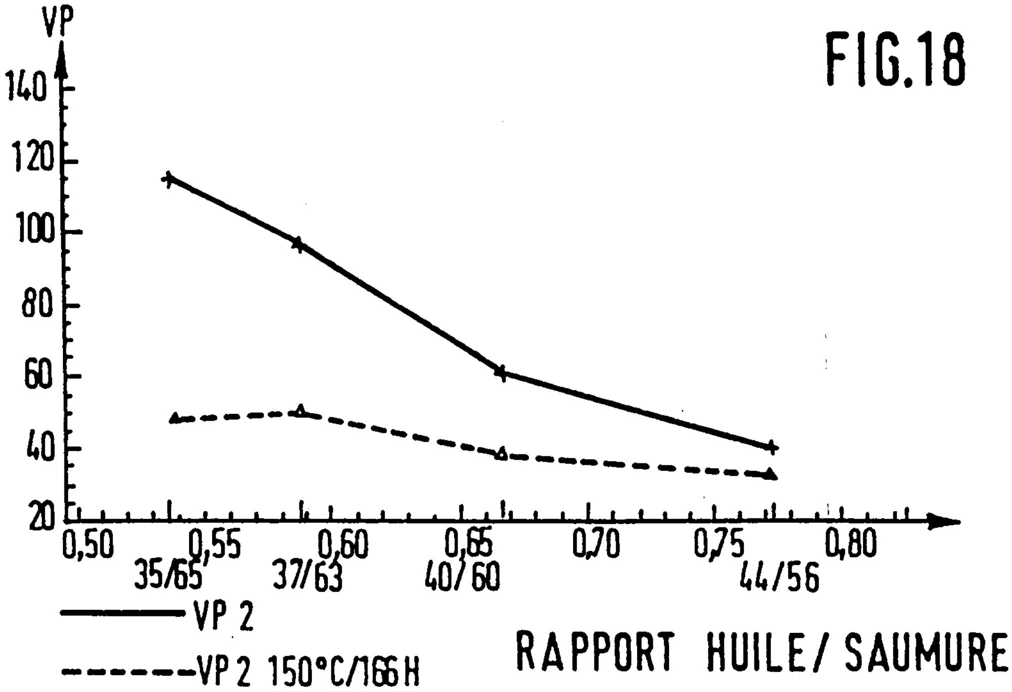
VP
140
120
100
80
60
40
20
0,50
0,55
0,60
0,65
0,70
0,75
0,80
35/65
37/63
40/60
44/56
VP 2
VP 2 150°C/166H
RAPPORT HUILE/ SAUMURE

FIG.19

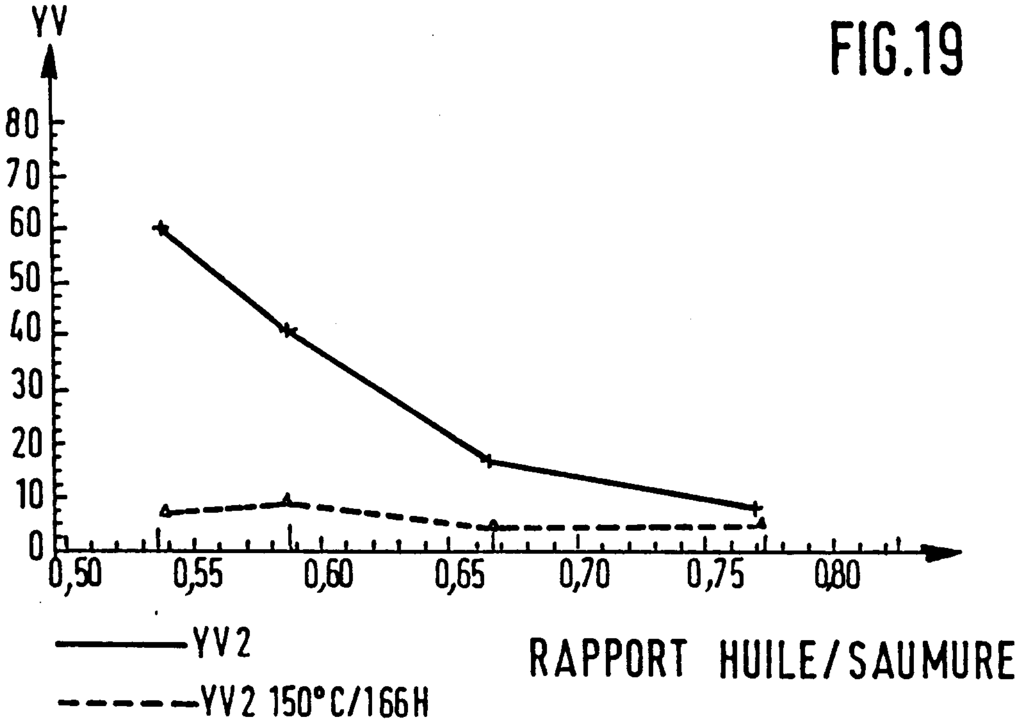
YV
80
70
60
50
40
30
20
10
0
0,50
0,55
0,60
0,65
0,70
0,75
0,80
YV 2
YV 2 150°C/166H
RAPPORT HUILE/SAUMURE

FIG. 20

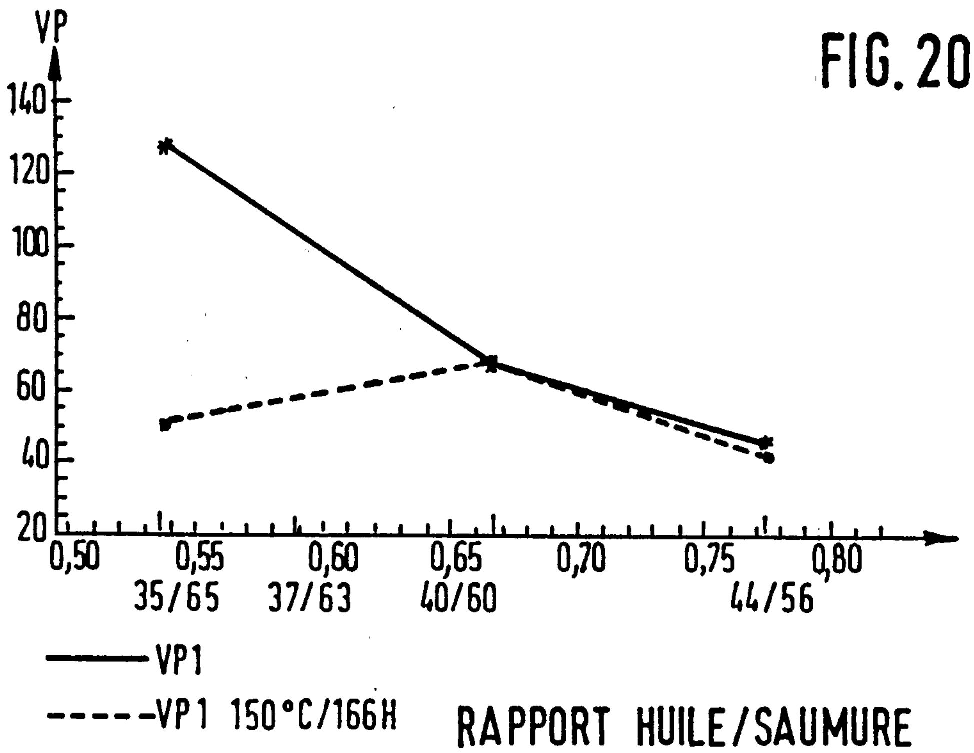
VP
140
120
100
80
60
40
20
0,50
0,55
0,60
0,65
0,70
0,75
0,80
35/65
37/63
40/60
44/56
VP1
VP1 150°C/166H
RAPPORT HUILE/SAUMURE

FIG. 21

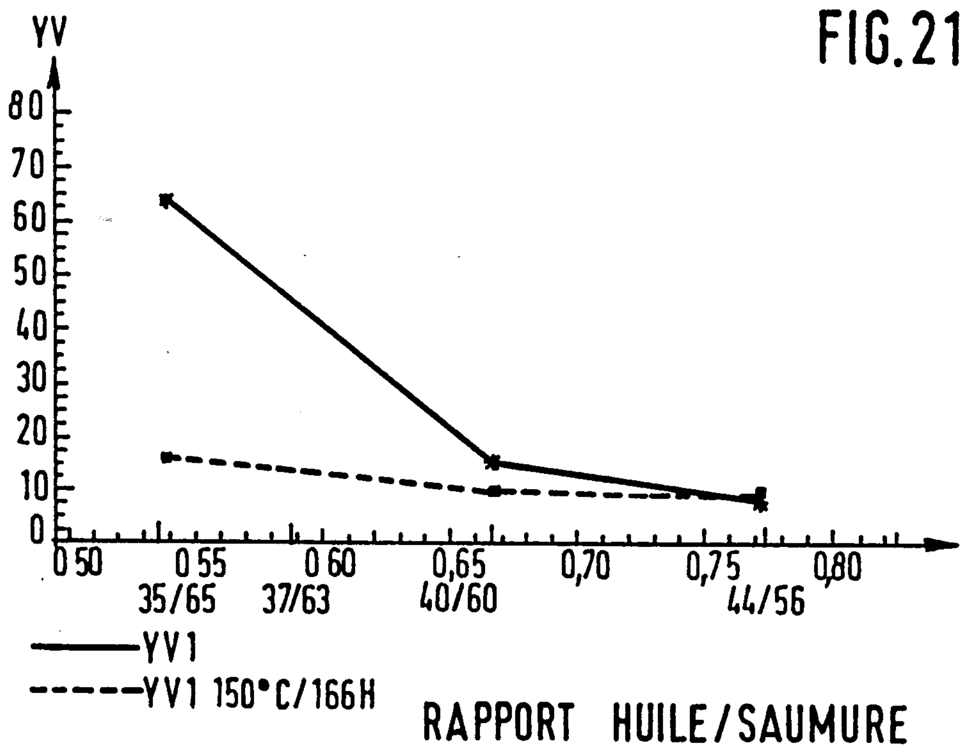
YV
80
70
60
50
40
30
20
10
0
0 50
0 55
0 60
0,65
0,70
0,75
0,80
35/65
37/63
40/60
44/56
YV1
YV1 150°C/166H
RAPPORT HUILE/SAUMURE

FIG. 22

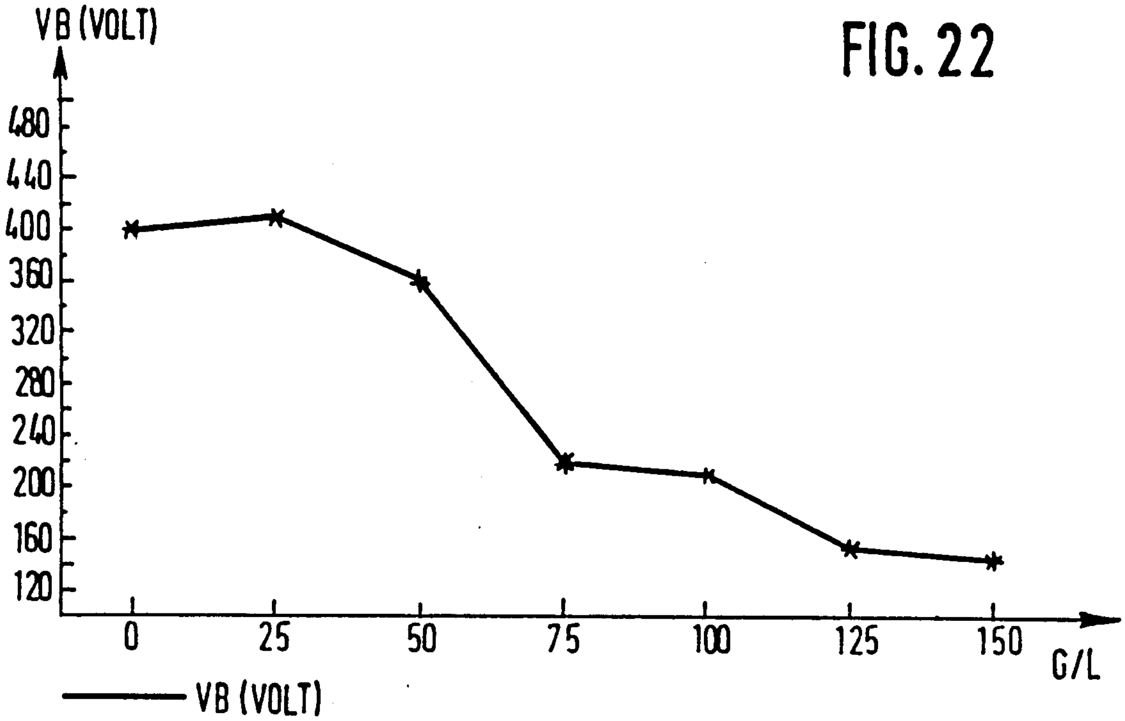


CONTAMINATION ARGILE FGN

FIG. 23

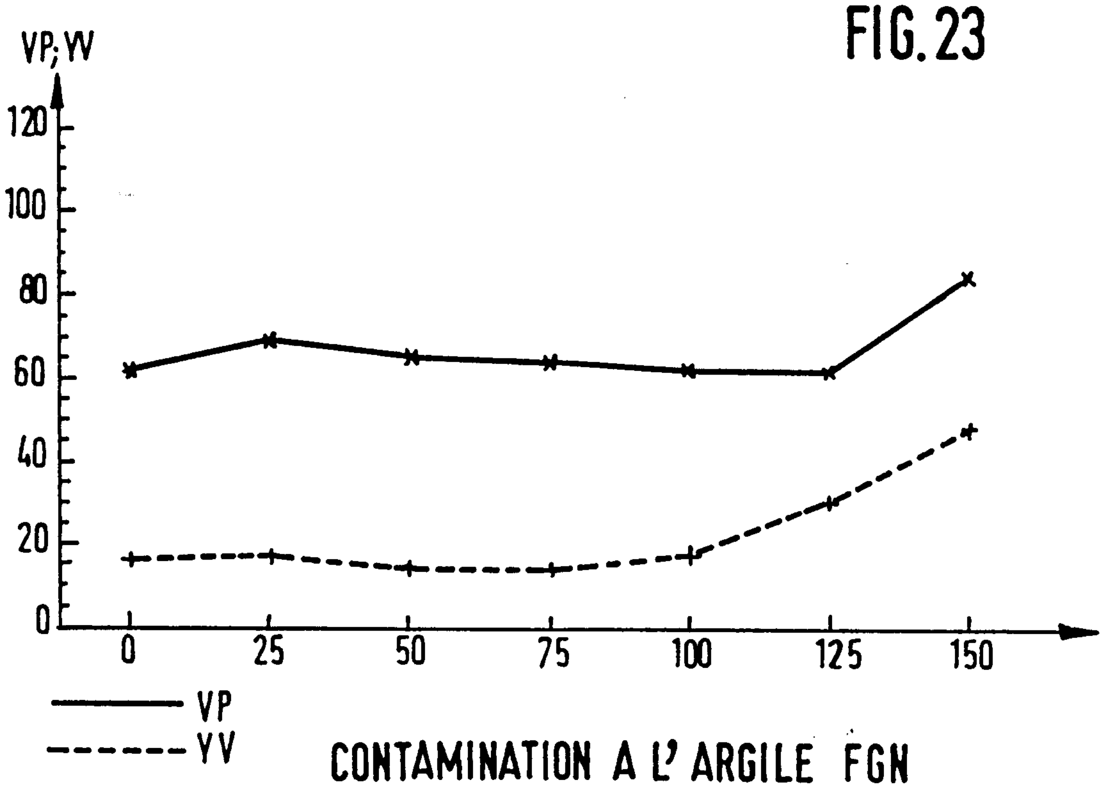


CONTAMINATION A L' ARGILE FGN

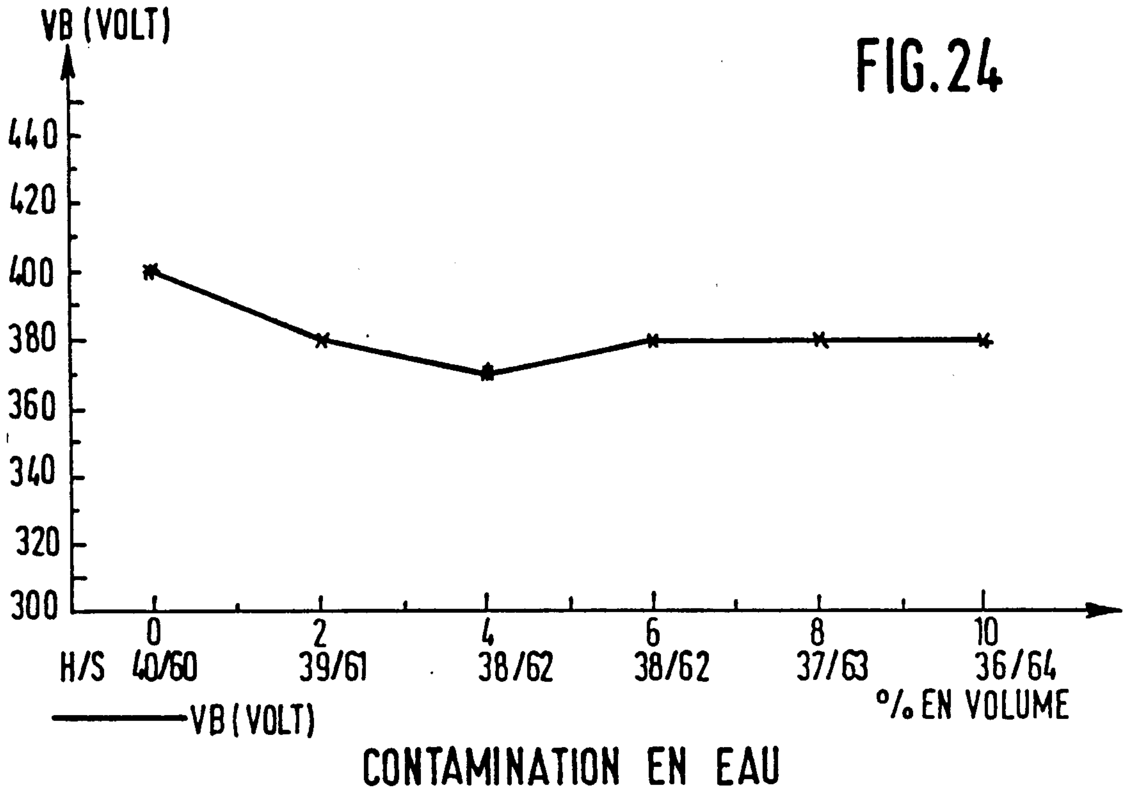
VB (VOLT)
440
420
400
380
360
340
320
300
0
2
4
6
8
10
H/S 40/60
39/61
38/62
38/62
37/63
36/64
% EN VOLUME
VB (VOLT)
CONTAMINATION EN EAU

FIG.24

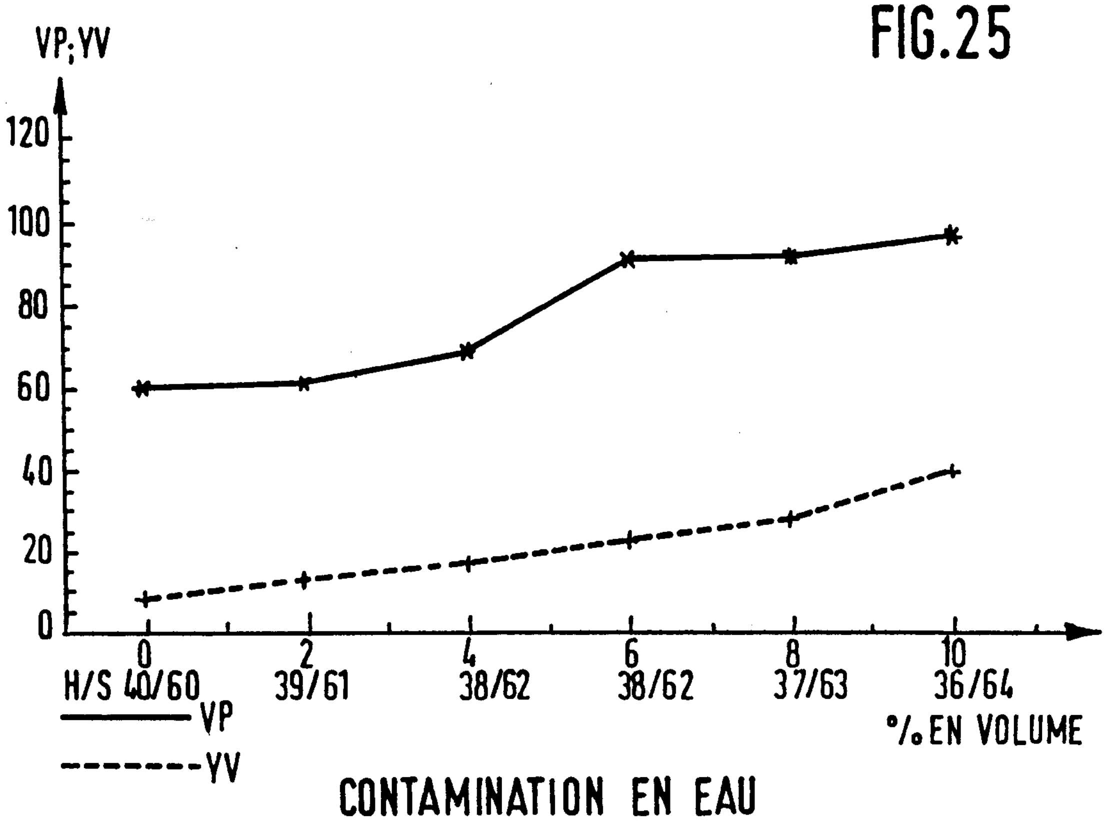
VP;YV
120
100
80
60
40
20
0
0
2
4
6
8
10
H/S 40/60
39/61
38/62
38/62
37/63
36/64
% EN VOLUME
VP
YV
CONTAMINATION EN EAU

FIG.25